# EUROPEAN PATENT SPECIFICATION

(11) **EP 4 372 551 B1**
(45) Date of publication and mention of the grant of the patent: **20.05.2026**
(21) Application number: 22857383.8
(22) Date of filing: 31.05.2022
(51) Int. Cl.: G06F 9/46, G06F 9/38, G06F 9/455, G06F 9/48, G06F 9/30

(54) **VIRTUAL MACHINE MANAGEMENT METHOD AND RELATED SYSTEM, AND STORAGE MEDIUM**
VERWALTUNGSVERFAHREN FÜR VIRTUELLE MASCHINEN UND ZUGEHÖRIGES SYSTEM SOWIE SPEICHERMEDIUM
PROCÉDÉ DE GESTION DE MACHINE VIRTUELLE ET SYSTÈME ASSOCIÉ, ET SUPPORT DE STOCKAGE

(30) Priority: 18.08.2021 CN 202110950385
(43) Date of publication of application: 22.05.2024
(73) Proprietor: Shenzhen Yinwang Intelligent Technologies Co., Ltd., Shenzhen City, Guangdong 518129 (CN)
(72) Inventor: CAO, Jianlong, Shenzhen, Guangdong 518129 (CN); TAO, Zhe, Shenzhen, Guangdong 518129 (CN)
(74) Representative: Gill Jennings & Every LLP
(86) International application number: PCT/CN2022/096350
(87) International publication number: WO 2023/020069

(56) References cited:
- CN-A- 103 049 325
- CN-A- 107 391 234
- CN-A- 109 558 211
- CN-A- 112 035 272
- US-A1- 2017 286 694
- SUNDAR RAJAN ARUN ET AL: "Automotive Embedded Systems : Key Technologies, Innovations, and Applications", 25 April 2021 (2021-04-25), pages 19 - 36, XP093202910, ISSN: 2522-8595, Retrieved from the Internet <URL:https://link.springer.com/content/pdf/10.1007/978-3-030-59897-6_2> DOI: 10.1007/978-3-030-59897-6_2
- REINHARDT DOMINIK ET AL: "An embedded hypervisor for safety-relevant automotive E/E-systems", PROCEEDINGS OF THE 9TH IEEE INTERNATIONAL SYMPOSIUM ON INDUSTRIAL EMBEDDED SYSTEMS (SIES 2014), IEEE, 18 June 2014 (2014-06-18), pages 189 - 198, XP032636744, DOI: 10.1109/SIES.2014.6871203
- ANONYMOUS V1: "TriCore V1.6 Core Architecture 32-bit Unified Processor Core Microcontrollers User Manual (Volume 1)", 1 May 2012 (2012-05-01), Munich, XP055865505, Retrieved from the Internet <URL:https://www.infineon.com/dgdl/tc1_6__architecture_vol1.pdf?fileId=db3a3043372d5cc801373b0f374d5d67> [retrieved on 20211124]

## Description

### TECHNICAL FIELD

This application relates to the field of computer technologies, and in particular, to a virtual machine management method, a related system, and a storage medium.

### BACKGROUND

With the development of information technologies and the constant improvement of chip manufacturing processes, embedded systems have been widely developed and applied. As a basic development platform of applications, an embedded operating system may simplify a development process of software and reduce overheads for subsequent software maintenance. Therefore, the embedded operating system has gradually developed into an important part of an embedded system. Embedded operating systems can be seen in the fields of Internet of Things, automotive electronics, industrial automation, military, and aeronautics and astronautics that have strict requirements on real-time performance and reliability.

In addition, with the constantly increasing functions and complexity of an automotive electronic control system, currently, a mid-range car is equipped with approximately 80 electronic control units (electronic control unit, ECU). This makes the development of automotive electronic software increasingly complex. In addition, the development of ECU application software is highly dependent on a hardware platform. This leads to problems such as poor application portability and software incompatibility. In 1990s, ECUs are limited by hardware capabilities. A main architecture of the ECU is a distributed microcontroller centric. The ECUs work independently and do not communicate with each other. Applications directly interact with hardware by using drivers.

With the application and development of new technologies such as electronic technologies, computer technologies, and information technologies, automotive electronic control emerges. The automobile industry has proposed, one after another, specifications such as open systems and the corresponding interfaces for automotive electronics/vehicle distributed executive (open systems and the corresponding interfaces for automotive electronics/vehicle distributed executive, OSEK/VDX), and an automotive open system architecture (automotive open system architecture, AUTOSAR). Unified standards and specifications are formulated for in-vehicle embedded real-time operating systems and related services, to implement an open development platform for automotive electronics, provide high modularization, portability, and reusability, simplify the development process, and reduce development costs.

The OSEK/VDX specification is the earliest standard formulated in terms of basic software of automobile electronics, and is proposed by the German automotive industry in 1993, aiming to provide a unified software architecture standard for ECUs, including embedded operating systems, communication stacks, network management protocols, and the like. However, with the performance improvement and expansion of ECUs, limitations of the OSEK/VDX specification cannot meet requirements for the development of automotive electronics toward a modern complex integration architecture. That is, many functions are integrated into one ECU for implementation.

Security and reliability of automotive electronics applications are not considered in OSEK/VDX. Based on OSEK/VDX, AUTOSAR proposes a series of implementation specifications related to isolation protection, to ensure security and reliability of automotive electronics applications. Currently, automotive electronic control is mainly performed by an electronic control unit (electronic control unit, ECU). With improvement of capabilities of ECUs, for a device having a memory protection unit (memory protection unit, MPU), AUTOSAR proposes a software partition isolation method, and divides a storage area of the device into an operating system (operating system, OS) partition and an application partition. Basic software such as a kernel, storage software, a peripheral, and an input/output (input/output, I/O) of an operating system is located in a trusted operating system partition in a privilege mode (privilege mode). Application software is logically classified into trusted applications and normal applications. The normal applications are classified into an untrusted application partition in a non-privilege mode (Non-privilege mode). The trusted applications, like the operating system kernel, are located in the trusted operating system partition in the privilege mode. Data on a data segment between the normal applications cannot be read or written, and code on the data segment cannot be executed. Only privilege switching can be performed by using a system call to access a system service.

Most existing microcontroller units (Microcontroller Unit, MCU) do not support hardware virtualization. When instruction simulation is used, each instruction is trapped in a host, to confirm whether the instruction can be processed. When privilege switching is performed by using a system call to access a system service, a virtual machine needs to be trapped in the host first. After the host confirms that processing can be performed, a virtual machine kernel performs system call processing. After the processing is completed by the virtual machine kernel, the virtual machine also needs to be trapped in the host to confirm a return address. Because each instruction needs to be trapped and simulated, system performance loss is large.

Sundar Rajan Arun ET AL: "Virtualizing an Automotive State-of-the-Art Microcontroller: Techniques and Its Evaluation : Key Technologies, Innovations, and Applications" In: "Automotive Embedded Systems : Key Technologies, Innovations, and Applications", 25 April 2021 (2021-04-25), Springer International Publishing discloses techniques for virtualizing a legacy system.

REINHARDT DOMINIK ET AL: "An embedded hypervisor for safety-relevant automotive E E-systems", PROCEEDINGS OF THE 9TH IEEE INTERNATIONAL SYMPOSIUM ON INDUSTRIAL EMBEDDED SYSTEMS (SIES 2014), IEEE, 18 June 2014 (2014-06-18), pages 189-198 discloses a microkernel approach to isolate safety relevant automotive software virtual machines by using a Memory Management Unit less embedded hypervisor.

Anonymous V1: "TriCore V1.6 Core Architecture 32-bit Unified Processor Core Microcontrollers User Manual (Volume 1)", 1 May 2012 (2012-05-01), URL:https://www.infineon.com/dgdl/tc1_6_architecture_vol1.pdf discloses a user manual of a TriCore core architecture.

### SUMMARY

This application discloses a virtual machine management method, a related system, and a storage medium, to reduce a quantity of times of being trapped in a host, improve system operation efficiency, and improve system performance.

According to a first aspect, an embodiment of this application provides a virtual machine management method. The method includes: A virtual machine manager receives a system call instruction from a virtual machine application, where the system call instruction carries a call number, and the system call instruction is a privileged instruction; the virtual machine manager obtains a first context save area CSA based on lower context of a virtual machine and a free CSA, and processes a second CSA based on the call number, to obtain a processed second CSA, where the second CSA is determined before the first CSA, the first CSA is adjacent to the processed second CSA, a return address of the first CSA is a system call service processing address of a virtual machine kernel, a return address of the processed second CSA is a next-hop address of the virtual machine kernel, and the processed second CSA indicates to jump to the next-hop address of the virtual machine kernel after system call processing is completed; and the virtual machine manager jumps, based on the return address of the first CSA, to the system call service processing address of the virtual machine kernel, so as to trigger the virtual machine kernel to perform the system call processing.

In this embodiment of this application, the virtual machine manager receives the system call instruction from the virtual machine application, obtains the first CSA based on the lower context of the virtual machine and the free context save area CSA, and processes the second CSA based on the call number, to obtain the processed second CSA. Then, the virtual machine manager jumps, based on the return address of the first CSA, to the system call service processing address of the virtual machine kernel, so as to trigger the virtual machine kernel to perform the system call processing. By using this means, the first CSA is obtained based on the lower context of the virtual machine and the free context save area CSA, and then the virtual machine manager may jump to the system call service processing address of the virtual machine kernel, to perform the system call. The processed second CSA is determined before the first CSA, and the first CSA is adjacent to the processed second CSA. In this way, after the system call processing is completed by the virtual machine kernel, based on the processed second CSA, jumping from the virtual machine kernel to the next-hop address of the virtual machine kernel may be implemented. Compared with the conventional technology in which a virtual machine needs to be trapped in the host for a plurality of times, in this solution, a quantity of times of being trapped is reduced, system operation efficiency is improved, and system performance is improved.

In an optional implementation, that the virtual machine manager obtains a first context save area CSA based on lower context of a virtual machine and a free CSA includes: The virtual machine manager stores the lower context of the virtual machine into the free CSA, to obtain a CSA of the lower context of the virtual machine; and the virtual machine manager modifies a mode of the CSA of the lower context to a kernel mode, modifies a memory protected region of the CSA of the lower context to a memory boundary of the virtual machine, modifies a stack address of the CSA of the lower context to a stack address of the virtual machine, modifies a return address of the CSA of the lower context to the system call service processing address of the virtual machine kernel, and modifies a context bit of the CSA of the lower context, to obtain the first CSA.

By using this means, the new CSA is constructed, so that the virtual machine manager can jump to the system call service processing address of the virtual machine kernel, to perform the system call.

In an optional implementation, the virtual machine manager copies the call number to the second CSA, and updates a return address of the second CSA to the next-hop address of the virtual machine kernel, to obtain the processed second CSA.

By using this means, after the virtual machine kernel completes the system call processing, based on the processed second CSA, jumping from the virtual machine kernel to the next-hop address of the virtual machine kernel may be implemented. Compared with the conventional technology in which a virtual machine needs to be trapped in the host for a plurality of times, in this solution, a quantity of times of being trapped is reduced, system operation efficiency is improved, and system performance is improved.

In an optional implementation, the next-hop address of the virtual machine kernel is a next instruction address of the virtual machine application.

In another optional implementation, the next-hop address of the virtual machine kernel is a result check address of the virtual machine manager.

In an optional implementation, the method further includes: The virtual machine manager obtains a processing result of the virtual machine kernel, and verifies the processing result; and the virtual machine manager jumps to the virtual machine application after verification on the processing result succeeds.

By using this means, the processing result is checked, and the virtual machine application is jumped to only after the verification succeeds, to ensure validity of the processing result, thereby improving security of the system call.

In an optional implementation, the system call instruction further carries an address of the virtual machine application, and before that the virtual machine manager jumps, based on the return address of the first CSA, to the virtual machine kernel, the method further includes: The virtual machine manager compares the address of the virtual machine application with a preset valid address, to confirm whether the address of the virtual machine application is valid.

By using this means, in this solution, validity of a call initiator is checked, so that security of the system call is improved.

According to a second aspect, an embodiment of this application provides a virtual machine management method. The method includes: When receiving an interrupt instruction from a peripheral device of a virtual machine, a virtual machine manager obtains an interrupt pending bit corresponding to the interrupt instruction; the virtual machine manager determines a target virtual machine based on the interrupt pending bit, where a kernel of the target virtual machine is a kernel to which the interrupt pending bit belongs; the virtual machine manager obtains a first CSA based on lower context of the target virtual machine and a free context save area CSA, and processes a second CSA, to obtain a processed second CSA, where the second CSA is determined before the first CSA, the first CSA is adjacent to the processed second CSA, a return address of the first CSA is an interrupt processing address of the kernel of the target virtual machine, a return address of the processed second CSA is a current instruction address of an application of the target virtual machine, and the processed second CSA indicates to jump to the current instruction address of the application of the target virtual machine; and the virtual machine manager jumps, based on the return address of the first CSA, to the interrupt processing address of the kernel of the target virtual machine, so as to trigger the kernel of the target virtual machine to perform interrupt processing.

In this embodiment of this application, after the virtual machine manager receives the interrupt instruction from the peripheral device, if the interrupt pending bit belongs to the kernel of the target virtual machine, the virtual machine manager obtains the first CSA based on the lower context of the target virtual machine and the free context save area CSA, and processes the second CSA, to obtain the processed second CSA. Then, the virtual machine manager jumps to the kernel of the target virtual machine based on the return address of the first CSA, so that the kernel of the target virtual machine performs the interrupt processing, and based on the processed second CSA, jumping from the virtual machine kernel to the next-hop address of the virtual machine kernel may be implemented. Compared with the conventional technology in which a virtual machine needs to be trapped in the host for a plurality of times, in this solution, a quantity of times of being trapped is reduced, system operation efficiency is improved, and system performance is improved.

In this solution, new context is constructed in real time to distribute a system call processing kernel, so that partition isolation between virtual machines is implemented, and a trusted base is reduced. Interrupt virtualization may be implemented by using this solution.

In an optional implementation, that the virtual machine manager obtains a first CSA based on lower context of the target virtual machine and a free context save area CSA includes: The virtual machine manager stores the lower context of the target virtual machine into the free CSA, to obtain a CSA of the lower context of the target virtual machine; and the virtual machine manager modifies a mode of the CSA of the lower context to a kernel mode, modifies a memory protected region of the CSA of the lower context to a memory boundary of the target virtual machine, modifies a stack address of the CSA of the lower context to a stack address of the target virtual machine, modifies a return address of the CSA of the lower context to the interrupt processing address of the kernel of the target virtual machine, and modifies a context bit of the CSA of the lower context, to obtain the first CSA.

In an optional implementation, the virtual machine manager updates a return address of the second CSA to the current instruction address of the application of the target virtual machine, to obtain the processed second CSA.

According to a third aspect, an embodiment of this application provides a virtual machine management apparatus. The apparatus includes: a receiving module, configured to receive a system call instruction from a virtual machine application, where the system call instruction carries a call number, and the system call instruction is a privileged instruction; a determining module, configured to: obtain a first context save area CSA based on lower context of a virtual machine and a free CSA, and process a second CSA based on the call number, to obtain a processed second CSA, where the second CSA is determined before the first CSA, the first CSA is adjacent to the processed second CSA, a return address of the first CSA is a system call service processing address of a virtual machine kernel, a return address of the processed second CSA is a next-hop address of the virtual machine kernel, and the processed second CSA indicates to jump to the next-hop address of the virtual machine kernel after system call processing is completed; and a processing module, configured to jump, based on the return address of the first CSA, to the system call service processing address of the virtual machine kernel, so as to trigger the virtual machine kernel to perform the system call processing.

In this embodiment of this application, the virtual machine manager receives the system call instruction from the virtual machine application, obtains the first CSA based on the lower context of the virtual machine and the free context save area CSA, and processes the second CSA based on the call number, to obtain the processed second CSA. Then, the virtual machine manager jumps, based on the return address of the first CSA, to the system call service processing address of the virtual machine kernel, so as to trigger the virtual machine kernel to perform the system call processing. By using this means, the first CSA is obtained based on the lower context of the virtual machine and the free context save area CSA, and then the virtual machine manager may jump to the system call service processing address of the virtual machine kernel, to perform the system call. The processed second CSA is determined before the first CSA, and the first CSA is adjacent to the processed second CSA. In this way, after the system call processing is completed by the virtual machine kernel, based on the processed second CSA, jumping from the virtual machine kernel to the next-hop address of the virtual machine kernel may be implemented. Compared with the conventional technology in which a virtual machine needs to be trapped in the host for a plurality of times, in this solution, a quantity of times of being trapped is reduced, system operation efficiency is improved, and system performance is improved.

In an optional implementation, the determining module is configured to: store the lower context of the virtual machine into the free CSA, to obtain a CSA of the lower context of the virtual machine; and modify a mode of the CSA of the lower context to a kernel mode, modify a memory protected region of the CSA of the lower context to a memory boundary of the virtual machine, modify a stack address of the CSA of the lower context to a stack address of the virtual machine, modify a return address of the CSA of the lower context to the system call service processing address of the virtual machine kernel, and modify a context bit of the CSA of the lower context, to obtain the first CSA.

In an optional implementation, the determining module is further configured to: copy the call number to the second CSA, and update a return address of the second CSA to the next-hop address of the virtual machine kernel, to obtain the processed second CSA.

In an optional implementation, the next-hop address of the virtual machine kernel is a next instruction address of the virtual machine application.

In another optional implementation, the next-hop address of the virtual machine kernel is a result check address of the apparatus.

In an optional implementation, the apparatus further includes a first verification module, configured to: obtain a processing result of the virtual machine kernel, and verify the processing result; and jump to the virtual machine application after verification on the processing result succeeds.

In an optional implementation, the system call instruction further carries an address of the virtual machine application, and the apparatus further includes a second verification module, configured to: compare the address of the virtual machine application with a preset valid address, to confirm whether the address of the virtual machine application is valid.

According to a fourth aspect, an embodiment of this application provides a virtual machine management apparatus in accordance with appended claim 12.

According to a fifth aspect, an embodiment of this application provides a virtual machine management apparatus in accordance with appended claim 13.

It may be understood that the apparatus in the third aspect and the apparatus in the fourth aspect are configured to perform the method provided in any implementation of the first aspect. Similarly, it may be understood that the apparatus in the fifth aspect is configured to perform the method provided in any implementation of the second aspect. Therefore, for beneficial effects that can be achieved, refer to beneficial effects in a corresponding method. Details are not described herein again.

### BRIEF DESCRIPTION OF DRAWINGS

The following describes the accompanying drawings used in embodiments of this application.
FIG. 1a is a schematic architectural diagram of a computer system to which an embodiment of this application is applicable;
FIG. 1b is a schematic architectural diagram of software in an existing AUTOSAR OS;
FIG. 1c is a schematic architectural diagram of a vehicle according to an embodiment of this application;
FIG. 1d is a schematic diagram of an architecture of a virtual machine management system according to an embodiment of this application;
FIG. 1e is a schematic diagram of a processing logic of a CSA according to an embodiment of this application;
FIG. 1f is a schematic diagram of a virtual machine architecture according to an embodiment of this application;
FIG. 2a is a schematic flowchart of a virtual machine management method according to an embodiment of this application;
FIG. 2b is a schematic diagram of a method for determining execution environment parameters according to an embodiment of this application;
FIG. 2c is a schematic diagram of a virtual machine management method according to an embodiment of this application;
FIG. 3a is a schematic flowchart of another virtual machine management method according to an embodiment of this application;
FIG. 3b is a schematic diagram of another virtual machine management method according to an embodiment of this application;
FIG. 4a is a schematic diagram of still another virtual machine management method according to an unclaimed example of this application;
FIG. 4b is a schematic diagram of still another virtual machine management method according to an unclaimed example of this application;
FIG. 5a is a schematic flowchart of yet another virtual machine management method according to an embodiment of this application;
FIG. 5b is a schematic flowchart of yet another virtual machine management method according to an embodiment of this application;
FIG. 6a is a schematic diagram of a structure of a virtual machine management apparatus according to an embodiment of this application;
FIG. 6b is a schematic diagram of a structure of another virtual machine management apparatus according to an embodiment of this application;
FIG. 6c is a schematic diagram of a structure of still another virtual machine management apparatus according to an embodiment of this application; and
FIG. 7 is a schematic diagram of a structure of a virtual machine management apparatus according to an embodiment of this application.

### DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application.

An embodiment of this application provides a virtual machine management method, which may be applied to a computer system using an automotive open system architecture (automotive open system architecture, AUTOSAR) standard. The computer system may be deployed on a vehicle, or may be deployed far away from the vehicle and perform wireless communication with the vehicle, for example, deployed on a server communicatively connected to the vehicle. The computer system deployed on the vehicle may be referred to as an in-vehicle device. The vehicle may be specifically a car, a truck, a motorcycle, a bus, a boat, an airplane, a helicopter, a lawn mower, a recreational vehicle, a playground vehicle, a construction device, a tram, a golf cart, a train, a trolley, or the like. This is not particularly limited in this embodiment of this solution.

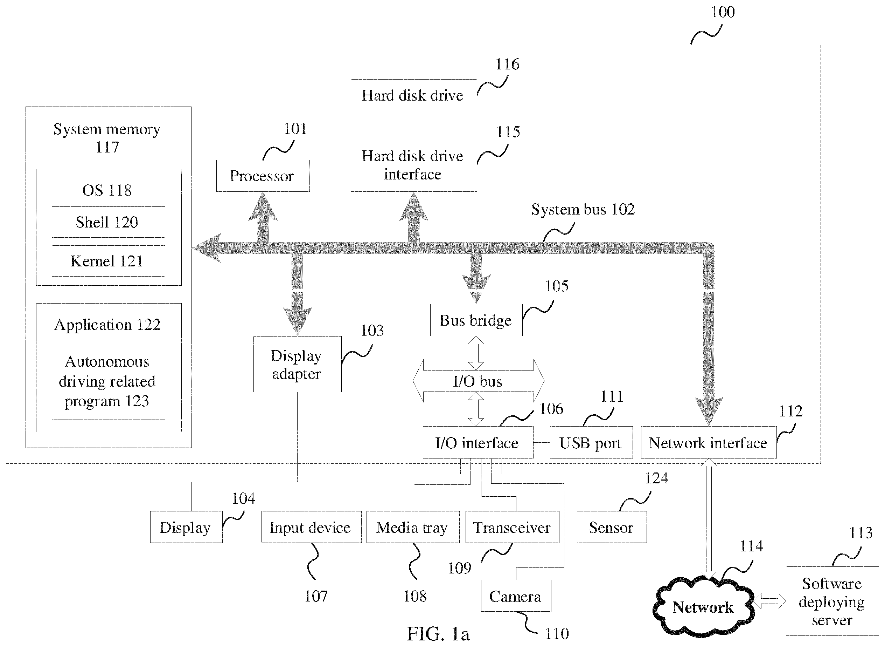

FIG. 1a is a schematic architectural diagram of a computer system to which an embodiment of this application is applicable. As shown in FIG. 1a, a computer system 100 includes a processor 101, and the processor 101 is coupled to a system bus 102. The processor 101 may be one or more processors, and each processor may include one or more processor cores. A display adapter (video adapter) 103 is disposed. The display adapter may drive a display 104, and the display 104 is coupled to the system bus 102. The system bus 102 is coupled to an input/output (I/O) bus by using a bus bridge 105. An I/O interface 106 is coupled to the I/O bus. The I/O interface 106 communicates with a plurality of I/O devices, such as an input device 107 (for example, a keyboard, a mouse, or a touchscreen) and a media tray (media tray) 108 (for example, a CD-ROM or a multimedia interface). A transceiver 109 (which may send and/or receive a radio communication signal), a camera 110 (which may capture static and dynamic digital video images), and an external USB interface 111 are disposed. Optionally, an interface connected to the I/O interface 106 may be a USB interface.

The processor 101 may be any conventional processor, including a reduced instruction set computing (reduced instruction set computing, RISC) processor, a complex instruction set computing (complex instruction set computing, CISC) processor, or a combination thereof. Optionally, the processor may be a dedicated apparatus such as an application-specific integrated circuit (application-specific integrated circuit, ASIC). Optionally, the processor 101 may be a neural network processor or a combination of the neural network processor and the foregoing conventional processor.

Optionally, in various embodiments in this application, the computer system 100 may be located far away from an autonomous vehicle, and may wirelessly communicate with the autonomous vehicle. In other aspects, some of the processes described in this application are performed on a processor disposed inside the autonomous vehicle, and others are performed by a remote processor, including taking actions used to perform a single operation.

The computer system 100 may communicate with a software deploying server 113 by using a network interface 112. The network interface 112 is a hardware network interface, for example, a network adapter. A network 114 may be an external network, for example, the Internet, or may be an internal network, for example, the Ethernet or a virtual private network (VPN). Optionally, the network 114 may alternatively be a wireless network, for example, a Wi-Fi network or a cellular network.

A hard disk drive interface 115 is coupled to the system bus 102. The hard disk drive interface 115 is connected to a hard disk drive 116. A system memory 117 is coupled to the system bus 102. Data running in the system memory 117 may include an operating system OS 118 and an application 122 of the computer system 100.

The operating system 118 includes a shell (Shell) 120 and a kernel (kernel) 121. The shell 120 is an interface between a user and the kernel (kernel) of the operating system. The shell is the outermost layer of the operating system. The shell manages interaction between the user and the operating system: waiting for an input of the user, interpreting the input of the user for the operating system, and processing various output results of the operating system.

The kernel 121 includes parts of the operating system that are used to manage a memory, a file, a peripheral, and a system resource. When directly interacting with hardware, the kernel of the operating system usually runs a process, provides inter-process communication, and provides functions such as CPU time slice management, interrupt, memory management, and I/O management.

The application 122 includes a related program 123 controlling autonomous driving of a vehicle, for example, a program managing interaction between an autonomous vehicle and an obstacle on a road, a program controlling a route or a speed of the autonomous vehicle, or a program controlling interaction between the autonomous vehicle and another autonomous vehicle on the road. The application 122 also exists in a system of the software deploying server (deploying server) 113. In an embodiment, when the application 122 needs to be executed, the computer system 100 may download the application 122 from the software deploying server 113.

The application 122 may further include another program. This is not specifically limited in this solution.

A sensor 124 is associated with the computer system 100. The sensor 124 is configured to detect an environment around the computer system 100. For example, the sensor 124 may detect animals, vehicles, obstacles, pedestrian crosswalks, and the like. Further, the sensor may detect ambient environments of the animals, vehicles, obstacles, pedestrian crosswalks, and the like, such as: an ambient environment of the animals, for example, other animals appearing around the animals, a weather condition, or brightness of the ambient environment. Optionally, if the computer system 100 is located on the autonomous vehicle, the sensor may be a camera, an infrared sensor, a chemical detector, a microphone, or the like.

An MPU is a hardware resource commonly used for memory protection in an embedded system. The embedded system uses multi-task operation and control. The system needs to provide a mechanism to ensure that a running task does not damage operation of another task, that is, to prevent unauthorized access to system resources and some other tasks.

The MPU uses a region (region) or a protected region (protected region) to manage address space of the memory. The region is an attribute associated with the address space of the memory. Generally, there are eight regions in the MPU, numbered from 0 to 7. A size and a start address of the region may be stored in a register c6 of a coprocessor CP 15. The size of the region may be any power of 2 from 4 KB to 4 GB. The start address of the region needs to be a multiple of the size of the region.

The operating system may configure an access permission for a region of the MPU, and the operating system may set, based on a current working mode of the processor, the access permission of the region to readable, read-only, inaccessible, or the like.

When the processor accesses a region of the memory, the MPU compares an access permission attribute of the region with the current working mode of the processor. If an access request of the processor complies with the access permission of the region, the MPU allows the kernel to read and write the memory. If the access request of the processor does not comply with the access permission of the region, an exception signal is generated.

In the embedded system, a memory management unit (memory management unit, MMU) can provide a more powerful memory protection mechanism than the MPU. The MPU generally provides only memory protection. In addition to memory protection, the MMU provides functions such as mapping a virtual address to a physical address.

Most machines that use the MMU use a paging mechanism. The operating system may set an access permission for each page table in the page table. Some page tables cannot be accessed, some page tables can be accessed only in a privilege mode, and some page tables can be accessed in both a user mode and the privilege mode. In addition, the access permission is classified into three types: readable, writable, and executable. After this setting, when the processor needs to access a virtual address (virtual address, VA), the MMU checks whether the processor is currently in the user mode or the privilege mode and whether a purpose of accessing the memory is to read data, write data, or execute a fetch instruction. If the purpose complies with the permission set by the operating system, access is allowed and the VA is converted into a physical address (physical address, PA). Otherwise, access is not allowed and an exception (exception) is generated.

A mechanism for processing an exception is similar to that for processing an interrupt. The difference is that the interrupt is generated by a peripheral device (for example, a hardware error or an input error), and the exception is generated inside the processor. Interrupt generation is irrelevant to an instruction currently executed by the processor, and the exception is caused by a problem in the instruction currently executed.

In a normal case, the processor executes a user program in the user mode. In a case of interrupt or exception, the processor switches to the privilege mode to execute a kernel program. After processing the interrupt or exception, the processor returns to the user mode to continue to execute the user program. Generally, the operating system divides virtual address space into user space and kernel space. For example, a range of the virtual address space of the Linux system on the x86 platform is 0x0000 0000 to Oxffff ffff. The first 3-GB space is the user space, and the last 1-GB space is the kernel space. The user program is loaded to the user space, and the kernel program is loaded to the kernel space. The user program cannot access data in the kernel or jump to the kernel space for execution. In this way, the kernel can be protected. If a process accesses an invalid address, the process may break down, but stability of the kernel and the system is not affected. When an interrupt or an exception occurs in the system, the system not only jumps to an interrupt service function or an exception service function for execution, but also switches from the user mode to the privilege mode, and jumps from an interrupt service program or an exception service program to kernel code for execution.

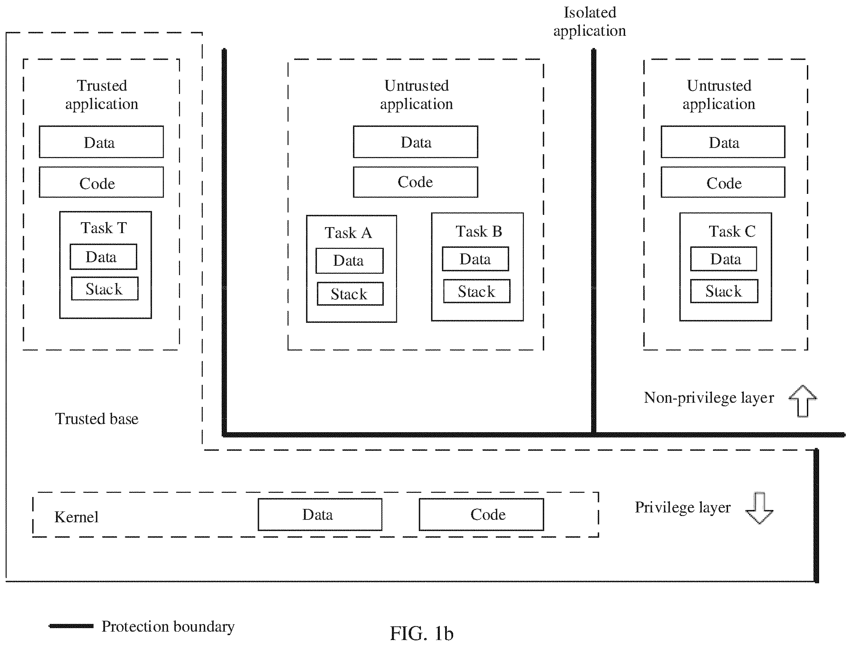

In an architecture shown in FIG. 1b, a normal application runs at a non-privilege layer. When processing operations such as task scheduling, a system service request, and I/O access, the normal application needs to perform privilege switching from a non-privilege mode to a privilege mode. However, privilege switching takes a relatively long time. For example, when the normal application requests, from the kernel, a service that requires a higher permission to run, for example, privilege I/O (privilege I/O) access or inter-process communication, the normal application cannot directly access a system service, but needs to perform privilege switching by using a system call.

Instructions of the processor are classified into normal instructions and privileged instructions. The privileged instructions can be executed only by the kernel. In the user mode, only the normal instructions can be executed. I/O access of the computer system includes privilege I/O access and normal I/O (normal I/O) access. The privilege I/O is I/O that can be accessed only by the kernel, and the normal I/O can be accessed only by an application. When a task in an application needs to access the privilege I/O, the privilege I/O can be accessed only by using a system call.

Specifically, when a user task in the normal application initiates a system service request to a system call handler (syscall handler), the following behavior occurs: The processor generates a synchronous exception (Trap), refreshes a pipeline (pipeline), saves a CPU register of the user task, reads an exception vector table, and switches an MPU protected region.

A task is a basic unit of operating system operation. How to manage a task object is a top priority of each operating system design. Task context is a processor general-purpose register and some special-function registers used during task operation. These registers represent an operating status of the processor. When different tasks occupy the processor in turn, corresponding registers need to be modified based on a task storage value, that is, task context is switched. In an operation process, the operating system frequently performs a task context-switching operation. Each time the operating system enters a scheduling point, the task context may be switched once. A more important task occupies processor resources. Therefore, a task switching speed greatly affects a real-time response capability of the operating system.

Each system call needs to undergo context-switching from the user task to the kernel. Next, the syscall handler invokes an application programming interface (application programming interface, API) of a system service. After the user task is completed, context-switching from the kernel to the user task needs to be performed once. The context-switching from the user task to the kernel or the context-switching from the kernel to the user task is a privilege switching.

In a system call process, context-switching (or privilege switching) needs to be performed twice. Clock overheads of each context-switching are approximately over 300 instruction cycles (cycles). Memory allocation, I/O access, and resource mutual exclusion are common operations in tasks. However, because resources or I/Os belong to a privilege layer, the resources or I/Os can be accessed only by using a system call. Memory allocation, I/O access, and the like frequently occur in the system. As a result, privilege switching overheads of the normal application are excessively high, which causes the application to fail to respond in a timely manner. As a result, incorrect transmission or a task scheduling exception may be caused.

In the in-vehicle device, an autonomous braking system (autonomous emergency braking, AEB) is an active safety technology. It uses a radar, a camera, and the like to detect roads ahead and performs emergency braking when a distance is less than a safe distance. Therefore, the AEB has extremely high requirements on real-time performance and system response.

In addition, in the partition architecture shown in FIG. 1a, a trusted application and the kernel form a trusted base. When there are an excessively large quantity of trusted applications, the trusted base has a security risk due to an excessively large size, because once a trusted task or kernel vulnerability is exploited, user data and kernel data are completely exposed, causing a security risk.

A trusted computing base, also referred to as a trusted base, is a set of all security protection mechanisms for implementing security protection for a computer system. The security protection mechanism may appear in a form of hardware, firmware, and software. Once a program error or a security risk occurs in a component of the trusted computer base, security of the entire system is harmed. On the contrary, if a problem occurs in parts other than the trusted computing base, only related permissions assigned to the parts by a system security policy are leaked. These permissions are generally low. Therefore, reducing the trusted computing base is critical to the overall security of the system.

Security threats that an automotive electronic system faces include remote intrusion and physical contact attacks. For a vehicle entertainment system with a security vulnerability, exploitation of the vulnerability causes only leakage of user privacy and does not cause personal safety loss. For a steering assistance system, if a security vulnerability exists, a personal safety risk may occur after remote control is cracked. It can be learned that real-time performance and security are critical in the in-vehicle device.

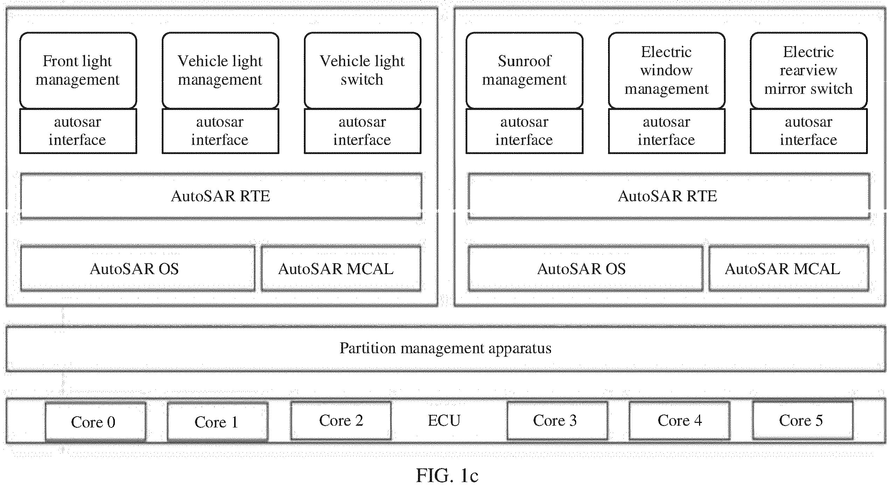

FIG. 1c is a schematic architectural diagram of a vehicle according to an embodiment of this application. In this solution, a vehicle light management system and an electric window management system on a conventional ECU can be migrated and run, without modification, to an ECU used by a VDC.

For example, the ECU used by the VDC uses a TC 397 chip, supports a Tricore architecture, and is a 6-core single-chip microcomputer. The conventional ECU uses a TC 297 chip, supports the Tricore architecture, but is a 3-core single-chip microcomputer.

The vehicle light system and electric window system are both based on the AutoSAR standard. The vehicle light system OS uses the Erika system, and the electric window system OS uses the Microsar system. The two systems support implementation of the Tricore system architecture. A partition management apparatus is deployed at the privilege layer, and the two systems are deployed at the user layer.

The schematic diagram is merely an example, and may alternatively be in another form. This is not specifically limited in this solution.

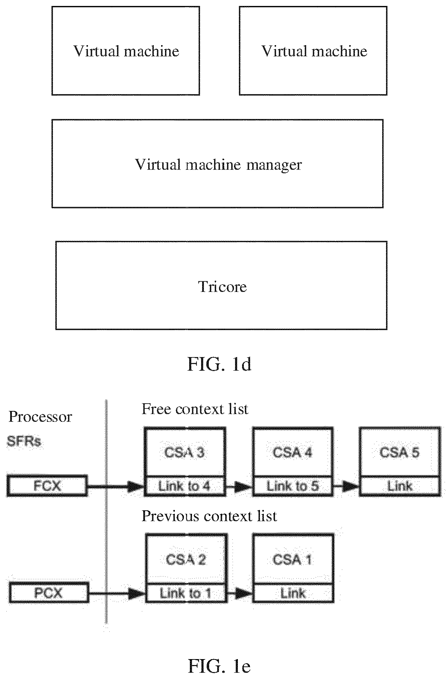

Based on this, an embodiment of this application provides a new system architecture. FIG. 1d is a schematic diagram of a new system architecture to which this application is applicable. As shown in FIG. 1d, in the new system architecture, a virtual machine is divided into a user layer, and a virtual machine manager is located at a privilege layer.

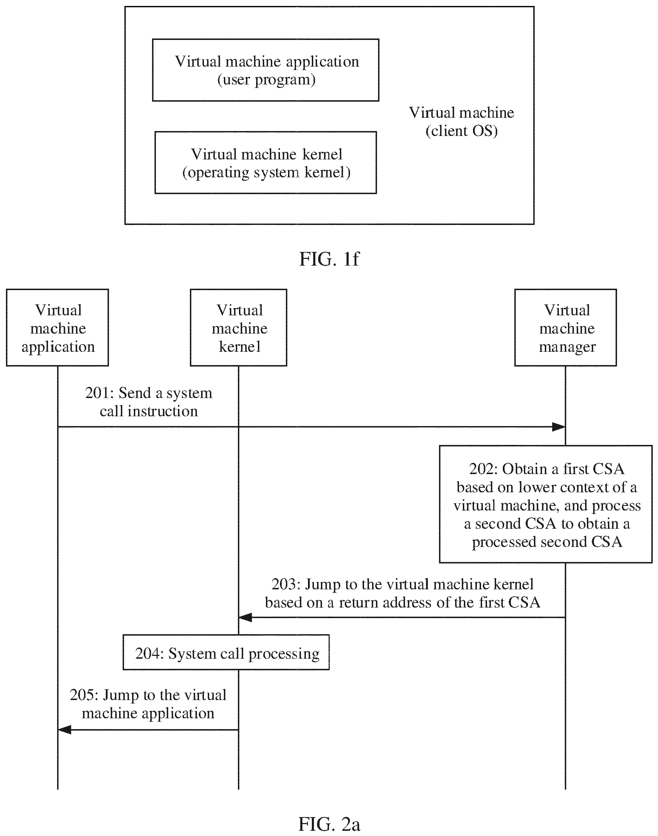

Specifically, the system includes a Tricore, the virtual machine manager, and the virtual machine. The virtual machine is bound to one or more cores. In addition, core resources of a CPU of a host end are not less than those required by the virtual machine. As shown in FIG. 1f, the virtual machine (a client operating system OS) includes a virtual machine application (a user program) and a virtual machine kernel (an operating system kernel). In a virtual machine management system of this solution, the virtual machine, on the whole, is in the user mode, and only the virtual machine manager runs in the kernel mode.

Because the operating system kernel of the client is deployed from the original kernel mode to the user mode, an exception occurs when the privileged instruction and I/O are accessed, and the virtual machine is trapped in the virtual machine manager in the kernel mode for processing. Similarly, when the user-mode user program of the client accesses a system call, the virtual machine is also first trapped in the virtual machine manager in the kernel mode for processing. Similarly, an external interrupt also passes through the virtual machine manager first, and then is distributed to the operating system kernel of the corresponding virtual machine for processing. Therefore, this application provides a virtual machine management method, to perform system call processing and interrupt processing.

In this embodiment of this application, the system call processing and the interrupt processing are virtualized by using CSA assistance, so that a system in a single core can be smoothly migrated to multi-core hardware. In addition, when a single-core system is cracked, another single-core system on the multi-core hardware is not affected, data isolation is implemented, the system call and interrupt can be isolated, and front-end and back-end control flow checks can be performed to ensure system security. Compared with hardware virtualization, hardware support is not required in this solution. Compared with pure virtualization simulation, full use of instruction simulation is avoided. In this solution, system performance is improved by optimizing system call processing and interrupt processing.

Relative terms in embodiments of this application are first described:
1. Tricore: an MCU architecture, and a 32-bit single-core single-chip microcomputer architecture, which has its own instruction set, and is mostly used in real-time scenarios.
2. CSA: Context Save Areas, context save area. Each CSA saves one piece of upper context or lower context. The Tricore architecture uses a linked list of fixed-size context save areas (CSA). The CSA includes a 16-word (word) memory and bytes of the CSA are aligned on boundaries of 16 words. Each CSA may save exactly one piece of upper context or one piece of lower context.

CSAs are linked together by using a link word (Link Word). The link word includes two fields that link a given CSA to a next CSA in a link. These fields are 4-bit segments and 16-bit offsets. Segment numbers and offsets are used to generate an effective address (EA) for the linked CSA.

Increasing a pointer offset by 1 always increases the EA to an address that is 16 words higher than a previous address. A total available range in each address segment of the CSA is 4 MB, so as to provide storage space for 216 CSAs.

The architecture saves and restores context faster than a conventional microprocessor. A unique memory subsystem design with a wide data path allows the architecture to perform fast data transmission between a processor register and an on-chip memory. Context-switching occurs when an event or instruction causes a program execution interrupt. A CPU then needs to process this event before continuing the program. Events and instructions that cause program execution interruption include:
- an interrupt or service request
- a trap
- a function call

The Tricore architecture uses a memory structure (the context save area CSA) to save context of a general-purpose register and a system register, and is similar to a register bank of an ARM. However, the Tricore architecture may configure these CSA spaces, and may explicitly execute CSA primitives such as download load, save save, restore restore, and store store.

The upper context (Upper Context) and the lower context (Lower Context) save data registers and address registers respectively. The upper context additionally saves system registers such as a stack register (stack pointer, SP) and a flag register (Program Status Word, PSW), and the lower context saves some general-purpose registers. The former is automatically saved by hardware during a function call, an exception, or an interrupt; and the latter needs to be explicitly called to transfer parameters.

For example, as shown in FIG. 1e, a free context list (Free Context List, FCX) packet includes three CSAs (3, 4, and 5), and a previous context list (Previous Context List, PCX) packet includes two CSAs (2 and 1). The FCX points to the CSA 3, which is the first available CSA. A link word of the CSA 3 points to the CSA 4, and a link word of the CSA 4 points to the CSA 5. The PCX points to the most recently saved CSA in the previous context list. A link word of the CSA 2 points to the CSA 1. The CSA 1 includes context previously saved by the CSA 2. When a context save operation is performed, the first CSA in the free context list (the CSA 3) is pulled out and placed in front of the previous context list.

Before the upper context or the lower context saves the first available CSA, the link word Link Word of the CSA is read to provide a new value for the FCX, that is, to link to the next available CSA. For the memory subsystem, context saving is a read/modify/write operation. The new value of the FCX points to the next available CSA and may be immediately used for subsequent context saving.

An LCX register points to one of the last CSAs in the available list, and is used to identify an upcoming available CSA list depletion event. If the value of the FCX is equal to that of the LCX when the context saving operation is attempted, the next instruction triggers to obtain a free CSA list depletion exception (FCD).

After the context saving operation is performed, a return address A[11] (RA) is updated:
- For a call, A[11] (RA) is updated with a return address of a function.
- For a synchronous exception, A[11] (RA) is updated with a PC of an instruction that causes the exception.
- For a SYSCALL and asynchronous exceptions or interrupts, A[11] (RA) is updated with a PC of the next instruction to be executed.

When a system call, an external interrupt, an exception, or a function call occurs, the upper context is automatically saved, and the lower context needs to be explicitly called and saved. This is shown in the following Table 1:

**Table 1**

| Event/Indication | Context operation | Complete indications | Context operation |
|---|---|---|---|
| Interrupt | Save upper context | Rfe-return from exception | Restore upper context |
| Trap | Save upper context | Rfe-return from exception | Restore upper context |
| Call | Save upper context | Ret-return from call | Restore upper context |
| BISR | Save lower context | Rslcx-restore lower context | Restore lower context |
| Svlcx-save lower context | Save lower context | Rslcx-restore lower context | Restore lower context |
| Stlcx-store lower context | Store lower context | Ldlcx-download lower context | Download lower context |
| Stucx-store upper context | Store upper context | Lducx-download upper context | Download upper context |

A main difference between the upper context and the lower context is that different registers are saved. A lower context register is generally similar to a general-purpose register, and may save a value of a global register before an interrupt, an exception, or a function call. After returning from an event such as an interrupt, the global register still retains a current status and does not automatically restore the lower context after the RET instruction or the RFE instruction is executed. When an exception occurs, an exception handler needs to save an original value and restore the original value during returning.

Context-switching (context-switching) is a process of storing and restoring a status of a CPU, and enables thread execution to be resumed from an interrupt point.

The CPU uses a time slice allocation algorithm to cyclically execute tasks. After a current task is executed for a time slice, the CPU switches to a next task. However, before switching, a status of the previous task is saved, so that the status of the task can be loaded again when the CPU switches back to the task next time. A process from saving the task to reloading the task is a process of context-switching.

Similar to an ARM architecture, a user mode enters the exception handler by using a syscall instruction. In this case, user upper context is automatically backed up. After a system call distribution function is entered, kernel upper context is created. After processing is completed, recycle kernel context by using a return from exception (RFE) instruction, restore the user upper context, and return to a next instruction of a client application.

3. A virtualization technology is a resource management (optimization) technology, and abstracts and converts various physical resources (for example, a CPU, a memory, disk space, or an I/O device such as a network adapter) of a computer, and presents a configuration environment that can be divided and randomly combined into one or more (virtual) logical computers.

A plurality of logical computers run on one computer at the same time, each logical computer may run a different operating system (Guest OS), and applications may run in mutually independent space without affecting each other, so that working efficiency of the computer is prominently improved.

GuestOS: a system (OS) in a VM (virtual machine). HostOS: a system (OS) in a physical machine.

Virtual address (VA): linear address space provided by the Guest OS for applications of the Guest OS.

Physical address (PA): a pseudo physical address abstracted by a virtual machine monitor and visible to the virtual machine.

Machine address (MA): a real machine address, that is, an address signal that appears on an address bus.

### Exception level (Exception Level, EL):

Different types of software usually have different levels of access permissions to resources such as a processor and a memory. For example, an operating system kernel has a higher access permission to system resources, but a user program usually has only a limited system configuration permission.

Tricore divides system resource access permissions by using different levels of privileges. A privilege level change occurs only when the processor encounters an exception or returns from an exception. Therefore, the privilege level is also referred to as the exception level. Access permissions are divided into a User-0 mode, a User-1 mode, and a Supervisor mode: In the User-0 mode, access to peripherals is not allowed, and interrupts cannot be enabled or prohibited. In the User-1 mode, application tasks are allowed to directly access non-critical system peripherals. The privilege mode allows to access all peripherals, and to read and write to system registers and privilege peripherals.

4. Privileged instruction: an instruction that has a privilege permission and can be used only by the operating system kernel. Because this type of instructions has highest permissions, if the instructions are not used properly, an entire system breaks down. For example, the privileged instruction has permissions of clearing a memory, setting a clock, allocating system resources, modifying a segment table and a page table of a virtual memory, and modifying a user access permission.

To ensure system security, this type of instructions can be used only in the operating system or other system software and is not directly provided for a user. Therefore, privilege execution needs to be performed in the kernel mode. Actually, the CPU may execute a universal set of instruction systems in the kernel mode.

Non-privileged instruction: an instruction that can be used by all programs.

To prevent a privileged instruction from being used in a user program, only a non-privileged instruction can be used in the user mode, and all instructions may be used in the kernel mode. When the privileged instruction is used in the user mode, an interrupt is generated to prevent the user from using the privileged instruction. Therefore, the user program runs in the user mode, and the program that needs to use the privileged instruction in the operating system runs in the kernel mode, so that security and reliability of the computer system are ensured. The only way to switch from the user mode to the kernel mode is an interrupt or an exception.

### 5. System call

System call (system call): Main functions of the operating system are to manage hardware resources and provide a good environment for an application developer to enable an application to have better compatibility. To achieve this objective, a kernel provides a series of multi-kernel functions with preset functions, and the multi-kernel functions are presented to a user by using a group of interfaces referred to as system calls. The system call is used to send a request of the application to the kernel, call a corresponding kernel function to complete required processing, and return a processing result to the application.

The system call is quite similar to a normal library function call. The only difference is that the system call is provided by an operating system kernel and runs in the kernel mode, and the normal function call is provided by a function library or a user and runs in the user mode. Generally, a process cannot access the kernel. The process cannot access memory space occupied by the kernel or call a kernel function. The system call is used to switch the user context to the kernel context to access a service provided by the kernel.

In the Tricore architecture, the system call also provides a service access from the user mode to the kernel mode. The user switches to the exception handler of the kernel by using the syscall instruction. In this case, user upper context is automatically backed up. After a system call distribution function is entered, kernel upper context is created. After processing is completed, recycle kernel context by using a return from exception (RFE) instruction, restore the user upper context, and return to a next instruction.

In Tricore, context is saved and restored both with the assistance of the CSA.

6. An interrupt is a process in which when an event that needs to be processed urgently occurs in a program execution process, operation of a current program on the CPU is temporarily stopped, a corresponding event processing program is executed, and after the processing is completed, an interrupt position of the original program is returned to or another program is scheduled for execution.

7. Mode switching is also referred to as processor status switching, including:
an interrupt/exception/system call from the user mode to the kernel mode: triggered by interrupting user process execution; and
execution of an interrupt return instruction by the OS from the kernel mode to the user mode: triggered when a control right is returned to a user process.

Process switching is releasing a processor from a running process, so that a to-be-run process occupies the processor for running. The process switching is essentially context-switching between the interrupted running process and the to-be-run process. A processing process is:
saving context of the interrupted process;
switching to process scheduling; and
restoring context of the to-be-run process.

The process switching needs to be performed in the kernel mode of the operating system.

The following describes in detail a virtual machine management method according to an embodiment of this application.

FIG. 2a is a schematic flowchart of a virtual machine management method according to an embodiment of this application. The method includes steps 201 to 205, which are specifically as follows:
201: A virtual machine application sends a system call instruction to a virtual machine manager, where the system call instruction carries a call number.

The system call instruction is a privileged instruction. The virtual machine application may be understood as a user program.

The virtual machine manager in this application may be understood as a host corresponding to a virtual machine.

202: The virtual machine manager receives the system call instruction from the virtual machine application, and obtains a first context save area CSA based on lower context of the virtual machine and a free CSA, and processes a second CSA based on the call number, to obtain a processed second CSA, where the second CSA is determined before the first CSA, the first CSA is adjacent to the processed second CSA, a return address of the first CSA is a system call service processing address of a virtual machine kernel, a return address of the processed second CSA is a next instruction address of the virtual machine application, and the processed second CSA indicates to jump to the next instruction address of the virtual machine application after system call processing is completed.

The virtual machine kernel may be understood as a user-mode kernel, that is, an operating system kernel.

In an optional implementation, that the virtual machine manager obtains a first context save area CSA based on lower context of the virtual machine and a free CSA includes:
The virtual machine manager stores the lower context of the virtual machine into the free CSA, to obtain a CSA of the lower context of the virtual machine; and
the virtual machine manager modifies a mode of the CSA of the lower context to a kernel mode, modifies a memory protected region of the CSA of the lower context to a memory boundary of the virtual machine, modifies a stack address of the CSA of the lower context to a stack address of the virtual machine, modifies a return address of the CSA of the lower context to the system call service processing address of the virtual machine kernel, and modifies a context bit of the CSA of the lower context, to obtain the first CSA.

Specifically, obtaining the available free CSA from a free context list of the virtual machine may be explicitly applying for an available context save area CSA by using an svlcx instruction based on an original CSA linked list.

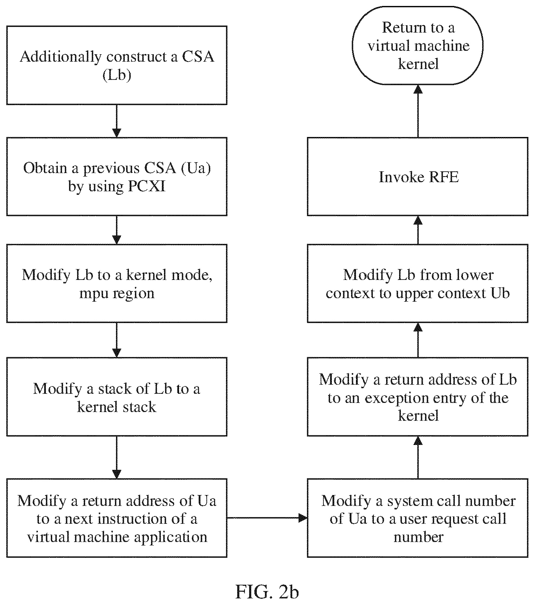

Processing the CSA of the lower context by the virtual machine manager to obtain the first CSA may be shown in FIG. 2b.

The virtual machine manager modifies a mode of the CSA of the lower context (Lb) to a kernel mode. Specifically, a program status word (Program Status Word, PSW) of the CSA of the lower context may be modified to the kernel mode; and the memory protected region of the CSA of the lower context may be modified to the memory boundary of the virtual machine (a client operating system OS), the stack address of the CSA of the lower context may be modified to the stack address of the virtual machine (the client operating system), the return address of the CSA of the lower context may be modified to the system call service processing address of the virtual machine kernel (the operating system kernel), and the context bit of the CSA of the lower context, specifically, a PCXI.UL flag bit of the CSA of the lower context may be modified to an upper context identifier, so as to obtain the CSA (Ub) of upper context.

During returning from an exception, return address information can be obtained only from the upper context. Therefore, context bit conversion needs to be performed.

The virtual machine manager copies the call number to the second CSA, and updates the return address of the second CSA to the next instruction address of the virtual machine application, to obtain the processed second CSA.

The virtual machine manager may determine the second CSA, that is, the most recently saved CSA, based on a previous context list in a register by finding an address (Ua) of a previous CSA by using a link word in the previous context list PCX. The virtual machine manager copies the call number (a parameter register) in the system call instruction to the CSA, and modifies the return address of the CSA to the next instruction address of the virtual machine application (the user program), so as to obtain the processed second CSA.

That the second CSA is determined before the first CSA, and the first CSA is adjacent to the processed second CSA may be understood as that the second CSA is determined before the first CSA in a time sequence, and the second CSA is adjacent to the first CSA.

For example, with reference to FIG. 1e, a CSA 2 is equivalent to the first CSA in this solution, and a CSA 1 is equivalent to the second CSA in this solution.

It should be noted that the foregoing is merely an example, and may alternatively be processing in another form. For example, a sequence of the foregoing modifications may be adaptively adjusted. This is not specifically limited in this solution.

After the call occurs, an exception handler is entered. To avoid using pure virtual simulation to simulate the system call to reduce overheads, an address entry vector table of the exception handler of the client operating system is maintained first. The address is obtained by capturing a privileged instruction for setting the vector table. When the call occurs, different from common pure virtualization, in this solution, complex context-switching simulation does not need to be performed. Instead, a client jump and return environment is constructed by using the CSA, so that quick call and return of the system call are implemented by fully combining advantages of a Tricore architecture.

203: The virtual machine manager jumps, based on the return address of the first CSA, to the system call service processing address of the virtual machine kernel.

Specifically, in step 203, after the first CSA and the processed second CSA are obtained, the virtual machine manager invokes a return from exception (Return from exception, RFE) instruction to return from an exception. In this case, the CSA (Ub) of the upper context is released, and the hardware tricore architecture restores the saved upper context to a corresponding upper context register. In this case, return to a system call processing entry of the virtual machine kernel. In addition, the context in this case has been switched to context of the kernel, including a memory boundary, stack information, and the like. In this case, the system call processing is performed based on the system call number requested by the virtual machine application, as in step 204.

In an optional implementation, the system call instruction carries the address of the virtual machine application, and before step 203, the method further includes:

The virtual machine manager compares the address of the virtual machine application with a preset valid address, to confirm whether the address of the virtual machine application is valid.

The preset valid address may include a plurality of valid addresses, and validity of the address of the virtual machine application is further confirmed by comparing the address of the virtual machine application with the foregoing valid address.

When the address of the virtual machine application is valid, step 203 is performed.

By using this means, in this solution, validity of a call initiator is checked, so that security of the system call is improved.

The virtual machine kernel corresponds to the virtual machine application. To be specific, when there are a plurality of virtual machine kernels, the virtual machine manager may jump to the corresponding virtual machine kernel based on the virtual machine application.

204: The virtual machine kernel performs the system call processing, to obtain a processing result.

The virtual machine kernel may perform the system call processing based on the call number, to obtain the processing result.

Each system call has a number. A system call table, that is, a function pointer array, is formed in the kernel. The call number is an array index of a corresponding function. The virtual machine application transmits the call number to the kernel to use a system function.

After the system call processing is completed, the virtual machine kernel invokes the RFE. In this case, Ua is released. After Ua is released, the virtual machine kernel returns to the virtual machine application, as shown in step 205.

205: The virtual machine kernel jumps to the virtual machine application.

Specifically, the virtual machine kernel invokes the return from exception RFE instruction, and the kernel releases Ua of the upper context, so as to jump to a next instruction of the virtual machine application.

In this embodiment of this application, the virtual machine manager receives the system call instruction from the virtual machine application, obtains the first CSA based on the lower context of the virtual machine and the free context save area CSA, and processes the second CSA based on the call number, to obtain the processed second CSA. Then, the virtual machine manager jumps, based on the return address of the first CSA, to the system call service processing address of the virtual machine kernel, so as to trigger the virtual machine kernel to perform the system call processing.

By using this means, the first CSA is obtained based on the lower context of the virtual machine and the free context save area CSA, and then the virtual machine manager may jump to the system call service processing address of the virtual machine kernel, to perform the system call. The processed second CSA is determined before the first CSA, and the first CSA is adjacent to the processed second CSA. In this way, after the system call processing is completed by the virtual machine kernel, based on the processed second CSA, jumping from the virtual machine kernel to the virtual machine application may be implemented. Because the CSA saves and loads context based on hardware, compared with the conventional technology in which a virtual machine needs to be trapped in the host for a plurality of times, in this solution, a quantity of times of being trapped is reduced, system operation efficiency is improved, and system performance is improved.

In another aspect, in this solution, validity of a call initiator is further checked, so that security of the system call is further improved.

In addition, in this solution, new context is constructed in real time to distribute a system call processing kernel, so that partition isolation between virtual machines is implemented, and a trusted base is reduced.

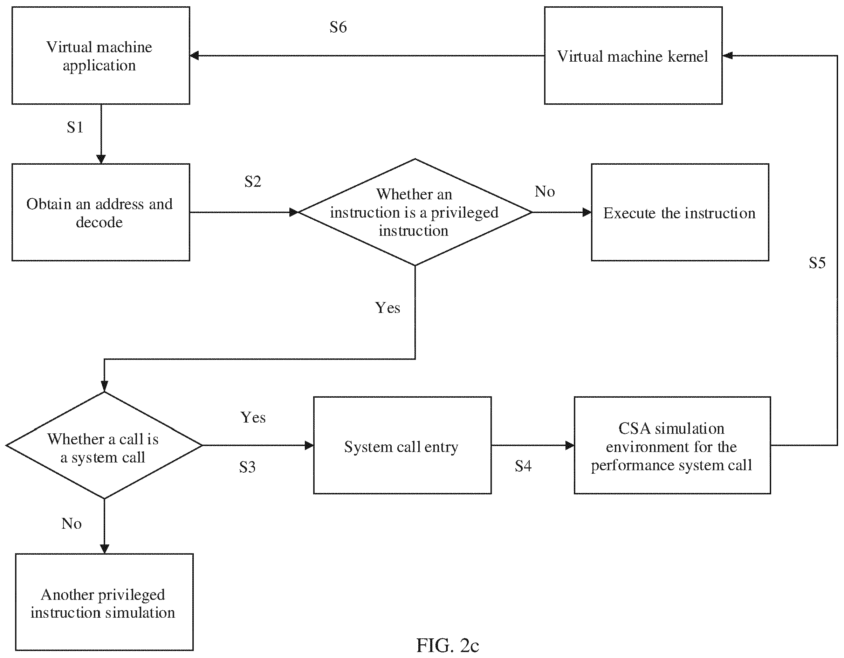

FIG. 2c is a schematic diagram of a virtual machine management method according to an embodiment of this application. The method includes steps S1 to S6, which are specifically as follows:
S1: After a virtual machine application sends an instruction, a CPU obtains an address of the virtual machine application, and the CPU decodes the instruction.
S2: The CPU confirms whether the instruction is a privileged instruction, and if the instruction is not a privileged instruction, the CPU directly executes the instruction. If the instruction is a privileged instruction and is not a system call instruction, another privileged instruction is used for simulation, for example, pure software simulation.
S3: If the instruction is a privileged instruction and is also a system call instruction, enter a system call entry of a virtual machine manager.
S4: The virtual machine manager obtains operating environment parameters, to construct a CSA simulation environment. The operating environment parameter may be understood as the foregoing first CSA and processed second CSA.
S5: The virtual machine manager jumps, based on a return address of the first CSA, to a system call service processing address of a virtual machine kernel, so as to trigger the virtual machine kernel to perform the system call processing.
S6: The virtual machine kernel jumps to a next instruction of the virtual machine application after completing the system call processing.

By using this means, the first CSA is obtained based on the lower context of the virtual machine and the free context save area CSA, and then the virtual machine manager may jump to the system call service processing address of the virtual machine kernel, to perform the system call. The processed second CSA is determined before the first CSA, and the first CSA is adjacent to the processed second CSA. In this way, after the system call processing is completed by the virtual machine kernel, based on the processed second CSA, jumping from the virtual machine kernel to the virtual machine application may be implemented. Because the CSA is saved and loaded based on hardware, compared with the conventional technology in which a virtual machine needs to be trapped in the host for a plurality of times, in this solution, a quantity of times of being trapped is reduced, system operation efficiency is improved, and system performance is improved.

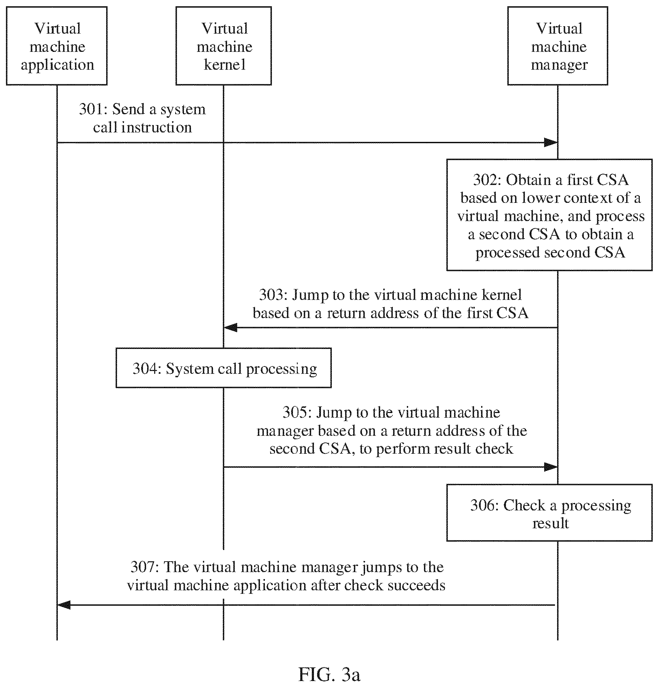

FIG. 3a is a schematic flowchart of another virtual machine management method according to an embodiment of this application. The method includes steps 301 to 307, which are specifically as follows:

301: A virtual machine application sends a system call instruction to a virtual machine manager, where the system call instruction carries a call number.

The system call instruction is a privileged instruction.

302: The virtual machine manager receives the system call instruction from the virtual machine application, and obtains a first context save area CSA based on lower context of a virtual machine and a free CSA, and processes a second CSA based on the call number, to obtain a processed second CSA, where the second CSA is determined before the first CSA, the first CSA is adjacent to the processed second CSA, a return address of the first CSA is a system call service processing address of a virtual machine kernel, a return address of the processed second CSA is a result check address of the virtual machine manager, and the processed second CSA indicates to jump to the result check address of the virtual machine manager after system call processing is completed.

In an optional implementation, that the virtual machine manager obtains a first context save area CSA based on lower context of the virtual machine and a free CSA includes:

The virtual machine manager stores the lower context of the virtual machine into the free CSA, to obtain a CSA of the lower context of the virtual machine; and
the virtual machine manager modifies a mode of the CSA of the lower context to a kernel mode, modifies a memory protected region of the CSA of the lower context to a memory boundary of the virtual machine, modifies a stack address of the CSA of the lower context to a stack address of the virtual machine, modifies a return address of the CSA of the lower context to the system call service processing address of the virtual machine kernel, and modifies a context bit of the CSA of the lower context, to obtain the first CSA.

Specifically, obtaining the available free CSA from a free context list of the virtual machine may be explicitly applying for an available context save area CSA by using an svlcx instruction based on an original CSA linked list.

Obtaining the available CSA from a free context list of the virtual machine may be explicitly applying for an available context save area CSA by using svlcx based on an original CSA linked list.

The virtual machine manager modifies a mode of the CSA of the lower context (Lb) to a kernel mode. Specifically, a program status word PSW of the CSA of the lower context may be modified to the kernel mode; and the memory protected region of the CSA of the lower context may be modified to the memory boundary of the virtual machine (a client operating system OS), the stack address of the CSA of the lower context may be modified to the stack address of the virtual machine (the client operating system), the return address of the CSA of the lower context may be modified to the system call service processing address of the virtual machine kernel (the operating system kernel), and the context bit of the CSA of the lower context, specifically, a PCXI.UL flag bit of the CSA of the lower context may be modified to an upper context identifier, so as to obtain the CSA (Ub) of upper context.

During returning from an exception, return address information can be obtained only from the upper context. Therefore, context bit conversion needs to be performed.

The foregoing is merely an example, and may alternatively be processing in another form. For example, a sequence of the foregoing modifications may be adaptively adjusted. This is not specifically limited in this solution.

The virtual machine manager may determine the most recently saved CSA based on a previous context list in a register by finding an address (Ua) of a previous CSA by using a link word in the previous context list PCX. The virtual machine manager copies the call number (a parameter register) in the system call instruction to the CSA, and modifies the return address of the CSA to the result check address of the virtual machine manager.

303: The virtual machine manager jumps, based on the return address of the first CSA, to the system call service processing address of the virtual machine kernel.

Specifically, after the first CSA and the processed second CSA are obtained, the virtual machine manager invokes a return from exception (Return from exception, RFE) instruction to return from an exception. In this case, the CSA (Ub) of the upper context is released, and the hardware tricore architecture restores the saved upper context to a corresponding upper context register. In this case, return to a system call processing entry of the virtual machine kernel. In addition, the context in this case has been switched to context of the kernel, including a memory boundary, stack information, and the like. In this case, the system call processing is performed based on the system call number requested by the virtual machine application, as in step 304.

In an optional implementation, the system call instruction carries the address of the virtual machine application, and before step 303, the method further includes:

The virtual machine manager compares the address of the virtual machine application with a preset valid address, to confirm whether the address of the virtual machine application is valid.

The preset valid address includes a plurality of valid addresses, and validity of the address of the virtual machine application is further confirmed by comparing the address of the virtual machine application with the foregoing valid address.

When the address of the virtual machine application is valid, step 303 is performed.

By using this means, in this solution, validity of a call initiator is checked, so that security of the system call is improved.

The virtual machine kernel corresponds to the virtual machine application. To be specific, when there are a plurality of virtual machine kernels, the virtual machine manager may jump to the corresponding virtual machine kernel based on the virtual machine application.

304: The virtual machine kernel performs the system call processing, to obtain a processing result.

The virtual machine kernel performs the system call processing based on the call number, to obtain the processing result.

Each system call has a number. A system call table, that is, a function pointer array, is formed in the kernel. The call number is an array index of a corresponding function. The virtual machine application transmits the call number to the kernel to use a system function.

After the system call processing is completed, the virtual machine kernel invokes the RFE. In this case, Ua is released. After Ua is released, the virtual machine kernel returns to the virtual machine manager, as shown in step 305.

305: The virtual machine kernel jumps to the virtual machine manager.

Specifically, return to the result check address of the virtual machine manager.

After the virtual machine kernel completes the system call processing, the kernel invokes the RFE. In this case, Ua is released, and the upper context register of Ua is restored. In this case, return to a result check function of the virtual machine manager. If check succeeds, return to the virtual machine application, as in step 306 and step 307.

306: The virtual machine manager obtains a processing result of the virtual machine kernel, and verifies the processing result.

In an optional implementation, the virtual machine manager obtains the processing result from the register, and compares a range of a value of the processing result with a preset range, to confirm accuracy of the processing result.

In another optional implementation, the virtual machine manager verifies the value and the like of the processing result, to confirm whether the result is accurate.

The foregoing is merely two examples, and may alternatively be verification of other information. This is not specifically limited in this solution.

307: The virtual machine manager jumps to the virtual machine application after verification succeeds.

Specifically, the virtual machine manager jumps to a next instruction of the virtual machine application.

By using this means, in this solution, the processing result is checked, and the virtual machine application is jumped to only after the verification succeeds, to ensure validity of the processing result, thereby improving security of the system call.

In this embodiment of this application, the virtual machine manager receives the system call instruction from the virtual machine application, obtains the first CSA based on the lower context of the virtual machine and the free context save area CSA, and processes the second CSA based on the call number, to obtain the processed second CSA. Then, the virtual machine manager jumps, based on the return address of the first CSA, to the system call service processing address of the virtual machine kernel, so as to trigger the virtual machine kernel to perform the system call processing. By using this means, the first CSA is obtained based on the lower context of the virtual machine and the free context save area CSA, and then the virtual machine manager may jump to the system call service processing address of the virtual machine kernel, to perform the system call. The processed second CSA is determined before the first CSA, and the first CSA is adjacent to the processed second CSA. In this way, after the system call processing is completed by the virtual machine kernel, based on the processed second CSA, jumping from the virtual machine kernel to the virtual machine manager may be implemented for result check. Because the CSA is saved and loaded based on hardware, compared with the conventional technology in which a virtual machine needs to be trapped in the host for a plurality of times, in this solution, a quantity of times of being trapped is reduced, system operation efficiency is improved, and system performance is improved. In addition, in this solution, validity check is performed on the processing result, and the virtual machine application is jumped to only when the verification succeeds, so that security of the system call is improved.

In another aspect, in this solution, validity of a call initiator is further checked, so that security of the system call is further improved.

In addition, in this solution, new context is constructed in real time to distribute a system call processing kernel, so that partition isolation between virtual machines is implemented, and a trusted base is reduced.

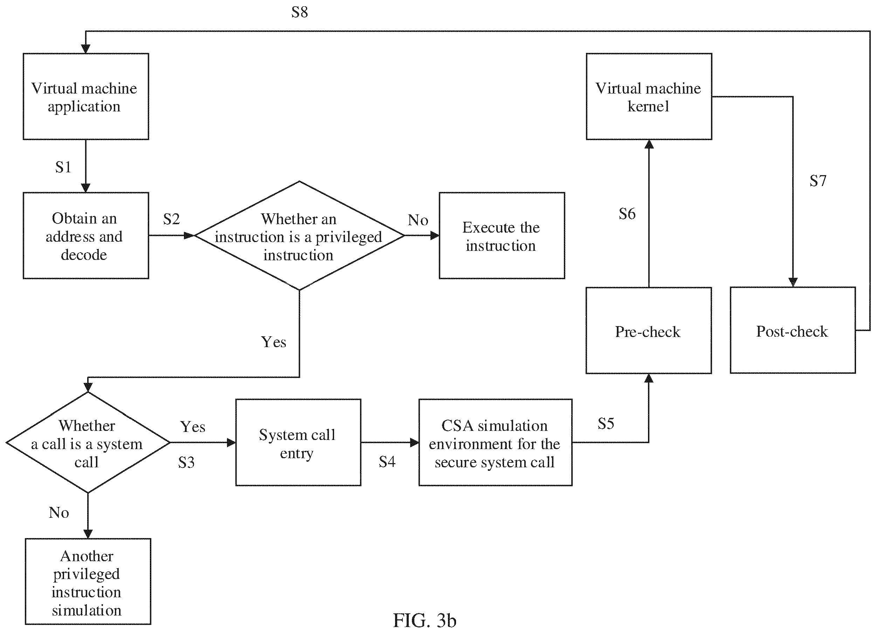

FIG. 3b is a schematic diagram of a virtual machine management method according to an embodiment of this application. The method includes steps S1 to S8, which are specifically as follows:
S1: After a virtual machine application sends an instruction, a CPU obtains an address of the virtual machine application, and the CPU decodes the instruction.
S2: The CPU confirms whether the instruction is a privileged instruction, and if the instruction is not a privileged instruction, the CPU directly executes the instruction. If the instruction is a privileged instruction and is not a system call instruction, another privileged instruction is used for simulation.
S3: If the instruction is a privileged instruction and is also a system call instruction, enter a system call entry of a virtual machine manager.
S4: The virtual machine manager obtains operating environment parameters, to construct a CSA simulation environment. The operating environment parameter may be understood as the foregoing first CSA and processed second CSA.

Then, step S5 is performed: The virtual machine manager performs pre-check to check validity of a call initiator.

If the check succeeds, step S6 is performed. The virtual machine manager jumps, based on a return address of the first CSA, to a system call service processing address of a virtual machine kernel, so as to trigger the virtual machine kernel to perform the system call processing.

After the processing is completed, the virtual machine kernel jumps to the virtual machine manager to perform post-check, that is, S7, to check the processing result.

After the check succeeds, S8 is performed to jump to the virtual machine application from the virtual machine manager.

By using this means, the first CSA is obtained based on the lower context of the virtual machine and the free context save area CSA, and then the virtual machine manager may jump to the system call service processing address of the virtual machine kernel, to perform the system call. The processed second CSA is determined before the first CSA, and the first CSA is adjacent to the processed second CSA. In this way, after the system call processing is completed by the virtual machine kernel, based on the processed second CSA, jumping from the virtual machine kernel to the virtual machine manager may be implemented for result check. Because the CSA is saved and loaded based on hardware, compared with the conventional technology in which a virtual machine needs to be trapped in the host for a plurality of times, in this solution, a quantity of times of being trapped is reduced, system operation efficiency is improved, and system performance is improved. In addition, in this solution, validity check is performed on the processing result, and the virtual machine application is jumped to only when the verification succeeds, so that security of the system call is improved.

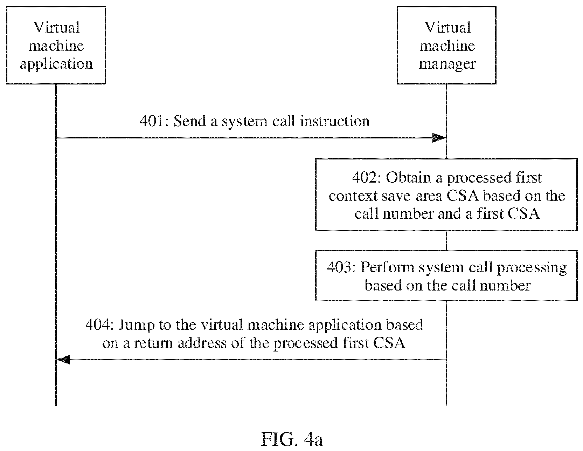

FIG. 4a is a schematic flowchart of still another virtual machine management method according to an unclaimed example of this application. The method includes steps 401 to 404, which are specifically as follows:

401: A virtual machine application sends a system call instruction to a virtual machine manager, where the system call instruction carries a call number.

The system call instruction is a privileged instruction.

402: The virtual machine manager receives the system call instruction from the virtual machine application, and obtains a processed first CSA based on the call number and a first context save area CSA, where a return address of the processed first CSA is a next instruction address of the virtual machine application.

The operating environment parameters are used by the virtual machine manager to manage a user-defined call (Hypercall, HVC).

The virtual machine manager manages the user-defined call. That is, the virtual machine manager has a permission to perform user-defined call processing.

In an optional implementation, that the virtual machine manager obtains a processed first CSA based on the call number and a first context save area CSA includes:
The virtual machine manager copies the call number to the first context save area CSA, and updates a return address of the first CSA to the next instruction address of the virtual machine application, to obtain the processed first CSA.

To be specific, the virtual machine manager determines a most recently saved CSA (that is, the first CSA) based on a previous context list in a register.

The virtual machine manager copies the call number to the most recently saved CSA, and updates the return address of the most recently saved CSA to the next instruction address of the virtual machine application.

The virtual machine manager may determine the most recently saved CSA based on the previous context list in the register by finding an address (Ua) of a previous CSA by using a link word in the previous context list PCX.

The virtual machine manager copies the call number (a parameter register) in the system call instruction to the CSA, and modifies the return address of the CSA to the next instruction address of the virtual machine application.

The foregoing is merely an example, and may alternatively be processing in another form. For example, a sequence of the foregoing processing may be adaptively adjusted. This is not specifically limited in this solution.

403: The virtual machine manager performs the system call processing, to obtain a processing result.

Specifically, the virtual machine manager further performs the system call processing based on the call number.

In an optional implementation, the system call instruction carries the address of the virtual machine application, and before step 403, the method further includes:
The virtual machine manager compares the address of the virtual machine application with a preset valid address, to confirm whether the address of the virtual machine application is valid.

The preset valid address stores a plurality of valid addresses, and validity of the address of the virtual machine application is further confirmed by comparing the address of the virtual machine application with the foregoing valid address.

When the address of the virtual machine application is valid, step 403 is performed.

By using this means, in this solution, validity of a call initiator is checked, so that security of the system call is improved.

404: The virtual machine manager jumps to the virtual machine application based on the return address of the processed first CSA after completing the system call processing.

Specifically, jump to the next instruction of the virtual machine application.

In this example, the virtual machine manager receives the system call instruction from the virtual machine application, and obtains the processed first CSA based on the call number and the first context save area CSA, where the return address of the processed first CSA is the next instruction address of the virtual machine application; and further performs the system call processing based on the call number, and after completing the system call processing, jumps, based on the return address of the processed first CSA, to the next instruction address of the virtual machine application. By using this means, HVC call processing at the same layer is added in this solution, and may be used to process a user-defined HVC request. To be specific, the virtual machine manager performs the system call processing, and jumps to the next instruction address of the virtual machine application after completing the system call processing. By using this means, system operation efficiency is improved, and system performance is improved.

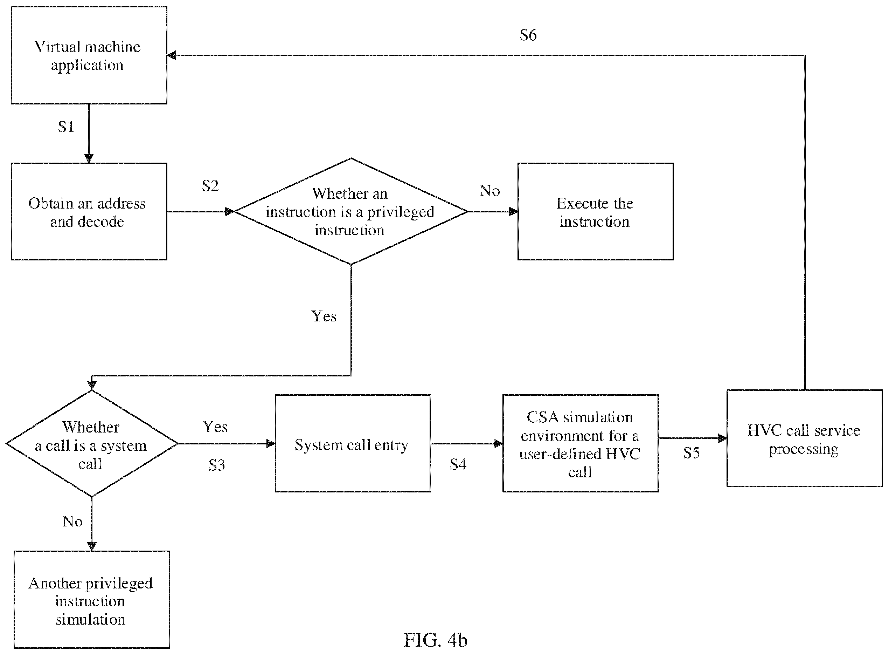

FIG. 4b is a schematic diagram of a virtual machine management method according to an unclaimed example of this application. The method includes steps S1 to S6, which are specifically as follows:
S1: After a virtual machine application sends an instruction, a CPU obtains an address of the virtual machine application, and the CPU decodes the instruction.
S2: The CPU confirms whether the instruction is a privileged instruction, and if the instruction is not a privileged instruction, the CPU directly executes the instruction. If the instruction is a privileged instruction and is not a system call instruction, another privileged instruction is used for simulation.
S3: If the instruction is a privileged instruction and is also a system call instruction, enter a system call entry of a virtual machine manager.
S4: The virtual machine manager constructs a CSA simulation environment for a user-defined HVC call, that is, the foregoing processed first CSA.
S5: The virtual machine manager calls an HVC call handler entry, and enters an HVC call service handler, to perform system call processing.
S6: The virtual machine manager jumps to a next instruction of the virtual machine application.

By using this means, HVC call processing at the same layer is added in this solution, and may be used to process a user-defined HVC request. To be specific, the virtual machine manager performs the system call processing, and jumps to the next instruction address of the virtual machine application after completing the system call processing. By using this means, system operation efficiency is improved, and system performance is improved.

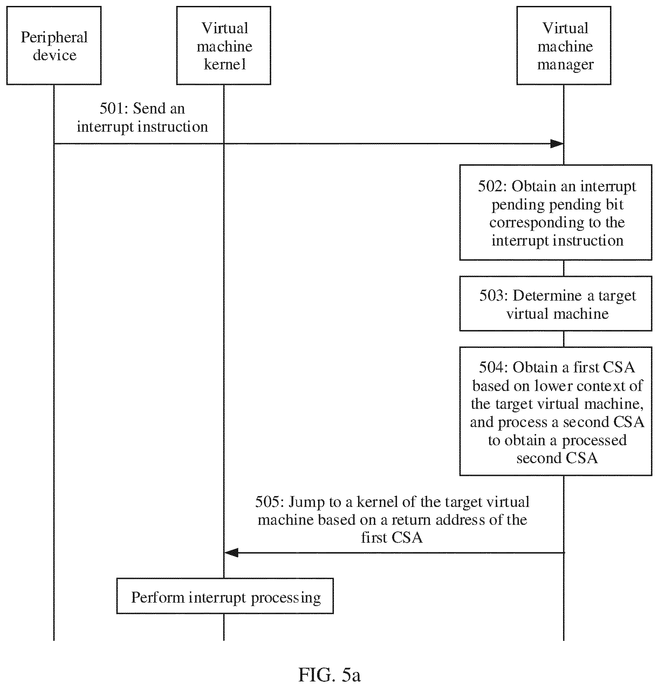

FIG. 5a is a schematic flowchart of still another virtual machine management method according to an embodiment of this application. The method includes steps 501 to 505, which are specifically as follows:
501: A virtual machine manager receives an interrupt instruction from a peripheral device of a virtual machine.

It should be noted that an interrupt is generated by the peripheral device (for example, a hardware error or an input error).

The peripheral device is relative to the virtual machine, and may be, for example, a keyboard, a mouse, or a sensor.

For example, when there is a specific event, the keyboard triggers the interrupt instruction and the like.

502: The virtual machine manager obtains an interrupt pending pending bit corresponding to the interrupt instruction.

503: The virtual machine manager determines a target virtual machine based on the interrupt pending bit, where a kernel of the target virtual machine is a kernel to which the interrupt pending bit belongs.

The virtual machine manager may determine, by sequentially obtaining a kernel ID of a CPU of each virtual machine and the interrupt pending pending bit, whether the interrupt pending pending bit belongs to a kernel corresponding to the kernel ID of the CPU of the virtual machine, and if the interrupt pending pending bit belongs to the kernel corresponding to the kernel ID of the CPU of the virtual machine, the virtual machine is the target virtual machine.

504: The virtual machine manager obtains a first CSA based on lower context of the target virtual machine and a free context save area CSA, and processes a second CSA, to obtain a processed second CSA, where the second CSA is determined before the first CSA, the first CSA is adj acent to the processed second CSA, a return address of the first CSA is an interrupt processing address of the kernel of the target virtual machine, a return address of the processed second CSA is a current instruction address of an application of the target virtual machine, and the processed second CSA indicates to jump to the current instruction address of the application of the target virtual machine.

The virtual machine manager obtains an available context save area CSA from a free context list of the target virtual machine.

The virtual machine manager stores the lower context of the target virtual machine into the available CSA, to obtain a CSA of the lower context of the target virtual machine.

The virtual machine manager modifies a mode of the CSA of the lower context to a kernel mode, modifies a memory protected region of the CSA of the lower context to a memory boundary of the target virtual machine, modifies a stack address of the CSA of the lower context to a stack address of the target virtual machine, modifies a return address of the CSA of the lower context to the interrupt processing address of the kernel of the target virtual machine, and modifies a context bit of the CSA of the lower context, to obtain the first CSA.

The virtual machine manager determines the most recently saved second CSA based on a previous context list in a register.

The virtual machine manager updates the return address of the most recently saved CSA to the current instruction address of the application of the target virtual machine.

If the interrupt pending pending bit does not belong to the kernel of the target virtual machine, the virtual machine manager jumps to a current running instruction of the virtual machine application.

505: The virtual machine manager jumps to the kernel of the target virtual machine based on the return address of the first CSA, so that the kernel of the target virtual machine performs interrupt processing.

After completing the interrupt processing, the kernel of the target virtual machine jumps to the current instruction address of the application of the target virtual machine.

In this embodiment of this application, after the virtual machine manager receives the interrupt instruction from the peripheral device, if the interrupt pending bit belongs to the kernel of the target virtual machine, the virtual machine manager obtains the first CSA based on the lower context of the target virtual machine and the free context save area CSA, and processes the second CSA, to obtain the processed second CSA. Then, the virtual machine manager jumps to the kernel of the target virtual machine based on the return address of the first CSA, so that the kernel of the target virtual machine performs the interrupt processing, and based on the processed second CSA, jumping from the virtual machine kernel to the next-hop address of the virtual machine kernel may be implemented. Compared with the conventional technology in which a virtual machine needs to be trapped in the host for a plurality of times, in this solution, a quantity of times of being trapped is reduced, system operation efficiency is improved, and system performance is improved.

In this solution, new context is constructed in real time to distribute a system call processing kernel, so that partition isolation between virtual machines is implemented, and a trusted base is reduced. Interrupt virtualization may be implemented by using this solution.

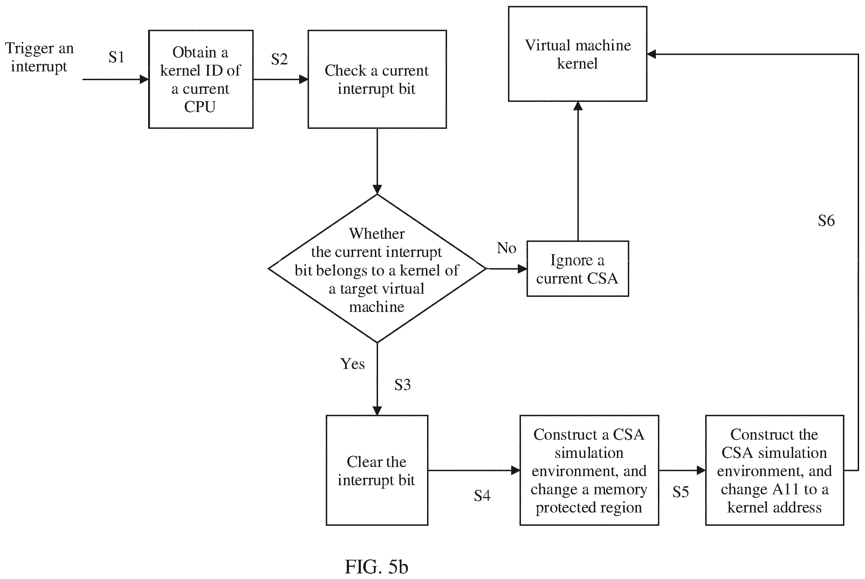

FIG. 5b is a schematic flowchart of a virtual machine management method according to an embodiment of this application. The method includes steps S1 to S6, which are specifically as follows:
S1: A peripheral device triggers an interrupt instruction, and a virtual machine manager obtains a kernel ID of a CPU of a virtual machine.

S2: The virtual machine manager checks a current interrupt bit, and determines whether the current interrupt bit belongs to a kernel of the CPU of the virtual machine. If the current interrupt bit does not belong to the kernel of the CPU of the virtual machine, the virtual machine manager jumps to a current instruction address of a virtual machine kernel.

If the current interrupt bit belongs to the kernel of the CPU of the virtual machine, step S3 is performed: The virtual machine manager clears the interrupt bit.

S4: The virtual machine manager changes a memory protected region.

S5: The virtual machine manager changes a return address of context to a kernel address, so as to construct a CSA simulation environment.

S6: The virtual machine manager jumps to the virtual machine kernel based on the CSA simulation environment, to perform interrupt processing.

Compared with the conventional technology in which a virtual machine needs to be trapped in the host for a plurality of times, in this solution, a quantity of times of being trapped is reduced, system operation efficiency is improved, and system performance is improved.

In this solution, new context is constructed in real time to distribute a system call processing kernel, so that partition isolation between virtual machines is implemented, and a trusted base is reduced. Interrupt virtualization may be implemented by using this solution.

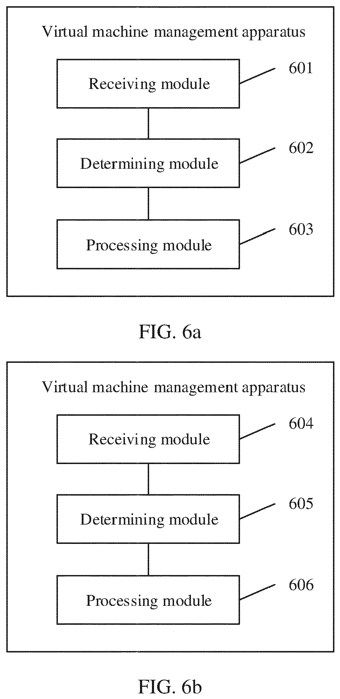

FIG. 6a shows a virtual machine management apparatus according to an embodiment of this application. The apparatus includes a receiving module 601, a determining module 602, and a processing module 603. Details are as follows:
The receiving module 601 is configured to receive a system call instruction from a virtual machine application, where the system call instruction carries a call number, and the system call instruction is a privileged instruction.

The determining module 602 is configured to: obtain a first context save area CSA based on lower context of a virtual machine and a free CSA, and process a second CSA based on the call number, to obtain a processed second CSA, where the second CSA is determined before the first CSA, the first CSA is adjacent to the processed second CSA, a return address of the first CSA is a system call service processing address of a virtual machine kernel, a return address of the processed second CSA is a next-hop address of the virtual machine kernel, and the processed second CSA indicates to jump to the next-hop address of the virtual machine kernel after system call processing is completed.

The processing module 603 is configured to jump, based on the return address of the first CSA, to the system call service processing address of the virtual machine kernel, so as to trigger the virtual machine kernel to perform the system call processing.

In an optional implementation, the determining module 602 is configured to: store the lower context of the virtual machine into the free CSA, to obtain a CSA of the lower context of the virtual machine; and modify a mode of the CSA of the lower context to a kernel mode, modify a memory protected region of the CSA of the lower context to a memory boundary of the virtual machine, modify a stack address of the CSA of the lower context to a stack address of the virtual machine, modify a return address of the CSA of the lower context to the system call service processing address of the virtual machine kernel, and modify a context bit of the CSA of the lower context, to obtain the first CSA.

In an optional implementation, the determining module 602 is further configured to: copy the call number to the second CSA, and update a return address of the second CSA to the next-hop address of the virtual machine kernel, to obtain the processed second CSA.

In an optional implementation, the next-hop address of the virtual machine kernel is a next instruction address of the virtual machine application.

In another optional implementation, the next-hop address of the virtual machine kernel is a result check address of the apparatus.

In an optional implementation, the apparatus further includes a first verification module, configured to: obtain a processing result of the virtual machine kernel, and verify the processing result; and jump to the virtual machine application after verification on the processing result succeeds.

In an optional implementation, the system call instruction further carries an address of the virtual machine application, and the apparatus further includes a second verification module, configured to: compare the address of the virtual machine application with a preset valid address, to confirm whether the address of the virtual machine application is valid.

In this embodiment of this application, the virtual machine manager receives the system call instruction from the virtual machine application, obtains the first CSA based on the lower context of the virtual machine and the free context save area CSA, and processes the second CSA based on the call number, to obtain the processed second CSA. Then, the virtual machine manager jumps, based on the return address of the first CSA, to the system call service processing address of the virtual machine kernel, so as to trigger the virtual machine kernel to perform the system call processing. By using this means, the first CSA is obtained based on the lower context of the virtual machine and the free context save area CSA, and then the virtual machine manager may jump to the system call service processing address of the virtual machine kernel, to perform the system call. The processed second CSA is determined before the first CSA, and the first CSA is adjacent to the processed second CSA. In this way, after the system call processing is completed by the virtual machine kernel, based on the processed second CSA, jumping from the virtual machine kernel to the next-hop address of the virtual machine kernel may be implemented. Compared with the conventional technology in which a virtual machine needs to be trapped in the host for a plurality of times, in this solution, a quantity of times of being trapped is reduced, system operation efficiency is improved, and system performance is improved.

For specific steps to be performed by the modules in the apparatus, refer to the embodiments shown in FIG. 2a, FIG. 2b, and FIG. 2c, or the embodiments shown in FIG. 3a and FIG. 3b. Details are not described herein again.

FIG. 6b shows another virtual machine management apparatus according to an unclaimed example of this application. The apparatus includes a receiving module 604, a determining module 605, and a processing module 606. Details are as follows:
The receiving module 604 is configured to receive a system call instruction from a virtual machine application, where the system call instruction carries a call number, and the system call instruction is a privileged instruction.

The determining module 605 is configured to obtain a processed first CSA based on the call number and a first context save area CSA, where a return address of the processed first CSA is a next instruction address of the virtual machine application.

The processing module 606 is configured to: perform system call processing based on the call number, and after the system call processing is completed, jump to the next instruction address of the virtual machine application based on the return address of the processed first CSA.

In an optional implementation, the determining module 605 is configured to: copy the call number to the first context save area CSA, and update a return address of the first CSA to the next instruction address of the virtual machine application, to obtain the processed first CSA.

In an optional implementation, the system call instruction further carries an address of the virtual machine application, and the apparatus further includes a second verification module, configured to: compare the address of the virtual machine application with a preset valid address, to confirm whether the address of the virtual machine application is valid.

In this example, the virtual machine manager receives the system call instruction from the virtual machine application, and obtains the processed first CSA based on the call number and the first context save area CSA, where the return address of the processed first CSA is the next instruction address of the virtual machine application; and further performs the system call processing based on the call number, and after completing the system call processing, jumps, based on the return address of the processed first CSA, to the next instruction address of the virtual machine application. By using this means, HVC call processing at the same layer is added in this solution, and may be used to process a user-defined HVC request. To be specific, the virtual machine manager performs the system call processing, and jumps to the next instruction address of the virtual machine application after completing the system call processing. By using this means, system operation efficiency is improved, and system performance is improved.

For specific steps to be performed by the modules in the apparatus, refer to the examples shown in FIG. 4a and FIG. 4b. Details are not described herein again.

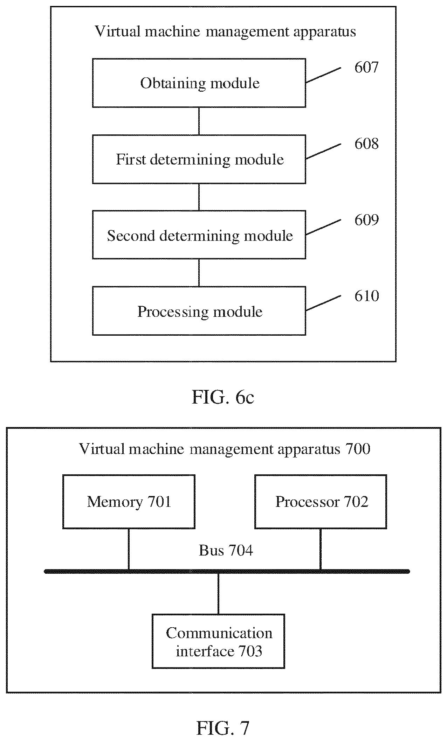

FIG. 6c shows still another virtual machine management apparatus according to an embodiment of this application. The apparatus includes an obtaining module 607, a first determining module 608, a second determining module 609, and a processing module 610. Details are as follows:
The obtaining module 607 is configured to: when receiving an interrupt instruction from a peripheral device of a virtual machine, obtain an interrupt pending bit corresponding to the interrupt instruction.

The first determining module 608 is configured to determine a target virtual machine based on the interrupt pending bit, where a kernel of the target virtual machine is a kernel to which the interrupt pending bit belongs.

The second determining module 609 is configured to: obtain a first CSA based on lower context of the target virtual machine and a free context save area CSA, and process a second CSA, to obtain a processed second CSA, where the second CSA is determined before the first CSA, the first CSA is adjacent to the processed second CSA, a return address of the first CSA is an interrupt processing address of the kernel of the target virtual machine, a return address of the processed second CSA is a current instruction address of an application of the target virtual machine, and the processed second CSA indicates to jump to the current instruction address of the application of the target virtual machine.

The processing module 610 is configured to jump, based on the return address of the first CSA, to the interrupt processing address of the kernel of the target virtual machine, so as to trigger the kernel of the target virtual machine to perform interrupt processing.

In an optional implementation, the second determining module 609 is configured to: store the lower context of the target virtual machine into the free CSA, to obtain a CSA of the lower context of the target virtual machine; and modify a mode of the CSA of the lower context to a kernel mode, modify a memory protected region of the CSA of the lower context to a memory boundary of the target virtual machine, modify a stack address of the CSA of the lower context to a stack address of the target virtual machine, modify a return address of the CSA of the lower context to the interrupt processing address of the kernel of the target virtual machine, and modify a context bit of the CSA of the lower context, to obtain the first CSA.

In an optional implementation, the second determining module 609 is further configured to: update a return address of the second CSA to the current instruction address of the application of the target virtual machine, to obtain the processed second CSA.

In this embodiment of this application, after the virtual machine manager receives the interrupt instruction from the peripheral device, if the interrupt pending bit belongs to the kernel of the target virtual machine, the virtual machine manager obtains the first CSA based on the lower context of the target virtual machine and the free context save area CSA, and processes the second CSA, to obtain the processed second CSA. Then, the virtual machine manager jumps to the kernel of the target virtual machine based on the return address of the first CSA, so that the kernel of the target virtual machine performs the interrupt processing, and based on the processed second CSA, jumping from the virtual machine kernel to the next-hop address of the virtual machine kernel may be implemented. Compared with the conventional technology in which a virtual machine needs to be trapped in the host for a plurality of times, in this solution, a quantity of times of being trapped is reduced, system operation efficiency is improved, and system performance is improved.

In this solution, new context is constructed in real time to distribute a system call processing kernel, so that partition isolation between virtual machines is implemented, and a trusted base is reduced. Interrupt virtualization may be implemented by using this solution.

For specific steps to be performed by the modules in the apparatus, refer to the embodiments shown in FIG. 5a and FIG. 5b. Details are not described herein again.

In this embodiment, the foregoing virtual machine management apparatuses are presented in a form of modules. The "module" herein may be an application-specific integrated circuit (application-specific integrated circuit, ASIC), a processor for executing one or more software or firmware programs, a memory, an integrated logic circuit, and/or another component that may provide the foregoing functions.

In addition, the modules in the foregoing virtual machine management apparatuses may be implemented by using the processor 702 of the virtual machine management apparatus shown in FIG. 7.

FIG. 7 is a schematic diagram of a hardware structure of a virtual machine management apparatus according to an embodiment of this application. The virtual machine management apparatus 700 (the apparatus 700 may be specifically a computer device) shown in FIG. 7 includes a memory 701, a processor 702, a communication interface 703, and a bus 704. Communication connections between the memory 701, the processor 702, and the communication interface 703 are implemented by using the bus 704.

The memory 701 may be a read only memory (Read Only Memory, ROM), a static storage device, a dynamic storage device, or a random access memory (Random Access Memory, RAM).

The memory 701 may store a program. When the program stored in the memory 701 is executed by the processor 702, the processor 702 and the communication interface 703 are configured to perform the steps of the virtual machine management method in embodiments of this application.

The processor 702 may be a general-purpose central processing unit (Central Processing Unit, CPU), a microprocessor, an application specific integrated circuit (Application Specific Integrated Circuit, ASIC), a graphics processing unit (graphics processing unit, GPU), or one or more integrated circuits, and is configured to execute a related program, to implement functions that need to be executed by the units in the virtual machine management apparatus in this embodiment of this application, or perform the virtual machine management method in the method embodiments of this application.

The processor 702 may alternatively be an integrated circuit chip and has a signal processing capability. In an implementation process, steps of the virtual machine management method in this application may be completed by using an integrated logic circuit of hardware in the processor 702, or by using instructions in a form of software. The processor 702 may alternatively be a general-purpose processor, a digital signal processor (Digital Signal Processing, DSP), an application specific integrated circuit (ASIC), a field programmable gate array (Field Programmable Gate Array, FPGA) or another programmable logic device, a discrete gate or a transistor logic device, or a discrete hardware component. The methods, steps, and logic block diagrams disclosed in embodiments of this application may be implemented or executed. The general-purpose processor may be a microprocessor, or the processor may be any conventional processor or the like.

Steps of the methods disclosed with reference to embodiments of this application may be directly performed by a hardware decoding processor, or may be performed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 701. The processor 702 reads information in the memory 701, and completes, in combination with hardware of the processor 702, functions that need to be performed by the units included in the virtual machine management apparatus in this embodiment of this application, or performs the virtual machine management method in the method embodiments of this application.

The communication interface 703 is a transceiver apparatus, for example, but not limited to a transceiver, to implement communication between the apparatus 700 and another device or a communication network. For example, data may be obtained by using the communication interface 703.

The bus 704 may include a path that transmits information between various components (for example, the memory 701, the processor 702, and the communication interface 703) of the apparatus 700.

It should be noted that although the apparatus 700 shown in FIG. 7 show only the memory, the processor, and the communication interface, in a specific implementation process, persons skilled in the art should understand that the apparatus 700 further includes another component necessary for normal operation. In addition, based on a specific requirement, persons skilled in the art should understand that, the apparatus 700 may further include a hardware component that implements another additional function. In addition, persons skilled in the art should understand that, the apparatus 700 may alternatively include only components required for implementing embodiments of this application, but does not need to include all components shown in FIG. 7.

An embodiment of this application further provides a computer-readable storage medium. The computer-readable storage medium stores an instruction. When the instruction is run on a computer or a processor, the computer or the processor is enabled to perform one or more steps in any one of the foregoing methods.

An embodiment of this application further provides a computer program product including instructions. When the computer program product runs on a computer or a processor, the computer or the processor is enabled to perform one or more steps in any one of the foregoing methods.

It may be clearly understood by persons skilled in the art that, for the purpose of convenient and brief description, for a detailed working process of the foregoing system, apparatus, and unit, refer to a specific description of a corresponding step process in the foregoing method embodiments. Details are not described herein again.

It should be understood that unless otherwise specified, "/" in descriptions of this application indicates an "or" relationship between associated objects. For example, A/B may indicate A or B. A and B may be singular or plural. In addition, in the descriptions of this application, unless otherwise stated, "a plurality of" means two or more than two. At least one of the following items (pieces) or a similar expression thereof means any combination of these items, including any combination of singular items (pieces) or plural items (pieces). For example, at least one of a, b, and c may represent a, b, c, a-b, a-c, b-c, or a-b-c, where a, b, and c may be singular or plural. In addition, for ease of clearly describing the technical solutions in embodiments of this application, in embodiments of this application, words such as "first" and "second" are used to distinguish same items or similar items whose functions and roles are basically the same. Persons skilled in the art may understand that words such as "first" and "second" do not limit a quantity and an execution order, and words such as "first" and "second" do not limit a definite difference. In addition, in embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

In the several embodiments provided in this application, it should be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid state disk (solid state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A virtual machine management method, wherein the method comprises:
receiving (301), by a virtual machine manager, a system call instruction from a virtual machine application, wherein the system call instruction carries a call number, and the system call instruction is a privileged instruction;
obtaining (302), by the virtual machine manager, a first context save area CSA based on lower context of a virtual machine and a free CSA, and processing a second CSA based on the call number, to obtain a processed second CSA, wherein the second CSA is determined before the first CSA, the first CSA is adjacent to the processed second CSA, a return address of the first CSA is a system call service processing address of a virtual machine kernel, a return address of the processed second CSA is a next-hop address of the virtual machine kernel, and the processed second CSA indicates to jump to the next-hop address of the virtual machine kernel after system call processing is completed; and
jumping (303), by the virtual machine manager based on the return address of the first CSA, to the system call service processing address of the virtual machine kernel, so as to trigger the virtual machine kernel to perform the system call processing (304).

2. The method according to claim **1,** wherein the obtaining, by the virtual machine manager, a first context save area CSA based on lower context of a virtual machine and a free CSA comprises:
storing, by the virtual machine manager, the lower context of the virtual machine into the free CSA, to obtain a CSA of the lower context of the virtual machine; and
modifying, by the virtual machine manager, a mode of the CSA of the lower context to a kernel mode, modifying a memory protected region of the CSA of the lower context to a memory boundary of the virtual machine, modifying a stack address of the CSA of the lower context to a stack address of the virtual machine, modifying a return address of the CSA of the lower context to the system call service processing address of the virtual machine kernel, and modifying a context bit of the CSA of the lower context, to obtain the first CSA.

3. The method according to claim 1 or 2, wherein the virtual machine manager copies the call number to the second CSA, and updates a return address of the second CSA to the next-hop address of the virtual machine kernel, to obtain the processed second CSA.

4. The method according to any one of claims 1 to 3, wherein the next-hop address of the virtual machine kernel is a next instruction address of the virtual machine application.

5. The method according to any one of claims 1 to 3, wherein the next-hop address of the virtual machine kernel is a result check address of the virtual machine manager.

6. The method according to claim 5, wherein the method further comprises:
obtaining, by the virtual machine manager, a processing result of the virtual machine kernel, and verifying the processing result (306); and
jumping (207), by the virtual machine manager, to the virtual machine application after verification on the processing result succeeds.

7. The method according to any one of claims 1 to 6, wherein the system call instruction further carries an address of the virtual machine application, and before the jumping, by the virtual machine manager based on the return address of the first CSA, to the virtual machine kernel, the method further comprises:
comparing, by the virtual machine manager, the address of the virtual machine application with a preset valid address, to confirm whether the address of the virtual machine application is valid.

8. A virtual machine management method, wherein the method comprises:
when receiving (501) an interrupt instruction from a peripheral device of a virtual machine, obtaining (502), by a virtual machine manager, an interrupt pending bit corresponding to the interrupt instruction;
determining (503), by the virtual machine manager, a target virtual machine based on the interrupt pending bit, wherein a kernel of the target virtual machine is a kernel to which the interrupt pending bit belongs;
obtaining (504), by the virtual machine manager, a first CSA based on lower context of the target virtual machine and a free context save area CSA, and processing a second CSA, to obtain a processed second CSA, wherein the second CSA is determined before the first CSA, the first CSA is adjacent to the processed second CSA, a return address of the first CSA is an interrupt processing address of the kernel of the target virtual machine, a return address of the processed second CSA is a current instruction address of an application of the target virtual machine, and the processed second CSA indicates to jump to the current instruction address of the application of the target virtual machine; and
jumping (505), by the virtual machine manager based on the return address of the first CSA, to the interrupt processing address of the kernel of the target virtual machine, so as to trigger the kernel of the target virtual machine to perform interrupt processing.

9. The method according to claim 8, wherein the obtaining, by the virtual machine manager, a first CSA based on lower context of the target virtual machine and a free context save area CSA comprises:
storing, by the virtual machine manager, the lower context of the target virtual machine into the free CSA, to obtain a CSA of the lower context of the target virtual machine; and
modifying, by the virtual machine manager, a mode of the CSA of the lower context to a kernel mode, modifying a memory protected region of the CSA of the lower context to a memory boundary of the target virtual machine, modifying a stack address of the CSA of the lower context to a stack address of the target virtual machine, modifying a return address of the CSA of the lower context to the interrupt processing address of the kernel of the target virtual machine, and modifying a context bit of the CSA of the lower context, to obtain the first CSA.

10. The method according to claim 8 or 9, wherein the virtual machine manager updates a return address of the second CSA to the current instruction address of the application of the target virtual machine, to obtain the processed second CSA.

11. A virtual machine management apparatus, wherein the apparatus comprises:
a receiving module (601), configured to receive (301) a system call instruction from a virtual machine application, wherein the system call instruction carries a call number, and the system call instruction is a privileged instruction;
a determining module (602), configured to: obtain (302) a first context save area CSA based on lower context of a virtual machine and a free CSA, and process a second CSA based on the call number, to obtain a processed second CSA, wherein the second CSA is determined before the first CSA, the first CSA is adjacent to the processed second CSA, a return address of the first CSA is a system call service processing address of a virtual machine kernel, a return address of the processed second CSA is a next-hop address of the virtual machine kernel, and the processed second CSA indicates to jump to the next-hop address of the virtual machine kernel after system call processing is completed; and
a processing module (603), configured to jump (303), based on the return address of the first CSA, to the system call service processing address of the virtual machine kernel, so as to trigger the virtual machine kernel to perform the system call processing (304).

12. A virtual machine management apparatus (700), comprising a processor (702) and a memory (701), wherein the memory is configured to store program code, and the processor is configured to invoke the program code, to perform the method according to any one of claims 1 to 7.

13. A virtual machine management apparatus (700), comprising a processor (702) and a memory (701), wherein the memory is configured to store program code, and the processor is configured to invoke the program code, to perform the method according to any one of claims 8 to 10.

## Patentansprüche

1. Verwaltungsverfahren für virtuelle Maschinen, wobei das Verfahren umfasst:
Empfangen (301), durch einen Manager für virtuelle Maschinen, einer Systemaufrufanweisung von einer Anwendung einer virtuellen Maschine, wobei die Systemaufrufanweisung eine Aufrufnummer trägt und die Systemaufrufanweisung eine privilegierte Anweisung ist;
Erlangen (302), durch den Manager für virtuelle Maschinen, eines ersten Kontextspeicherbereichs (context save area, CSA) basierend auf einem unteren Kontext einer virtuellen Maschine und einem freien CSA, und Verarbeiten eines zweiten CSA basierend auf der Aufrufnummer, um einen verarbeiteten zweiten CSA zu erlangen, wobei der zweite CSA vor dem ersten CSA bestimmt wird, der erste CSA dem verarbeiteten zweiten CSA benachbart ist, eine Rücksprungadresse des ersten CSA eine Systemaufruf-Dienstverarbeitungsadresse eines Kernels der virtuellen Maschine ist, eine Rücksprungadresse des verarbeiteten zweiten CSA eine Next-Hop-Adresse des Kernels der virtuellen Maschine ist, und der verarbeitete zweite CSA angibt, zu der Next-Hop-Adresse des Kernels der virtuellen Maschine zu springen, nachdem die Systemaufrufverarbeitung abgeschlossen ist; und
Springen (303), durch den Manager für virtuelle Maschinen basierend auf der Rücksprungadresse des ersten CSA, zu der Systemaufruf-Dienstverarbeitungsadresse des Kernels der virtuellen Maschine, um den Kernel der virtuellen Maschine auszulösen, die Systemaufrufverarbeitung durchzuführen (304).

2. Verfahren nach Anspruch 1, wobei das Erlangen, durch den Manager für virtuelle Maschinen, eines ersten Kontextspeicherbereichs CSA basierend auf einem unteren Kontext einer virtuellen Maschine und einem freien CSA umfasst:
Speichern, durch den Manager für virtuelle Maschinen, des unteren Kontexts der virtuellen Maschine in dem freien CSA, um einen CSA des unteren Kontexts der virtuellen Maschine zu erlangen; und
Modifizieren, durch den Manager für virtuelle Maschinen, eines Modus des CSA des unteren Kontexts in einen Kernel-Modus, Modifizieren einer speichergeschützten Region des CSA des unteren Kontexts auf eine Speichergrenze der virtuellen Maschine, Modifizieren einer Stapeladresse des CSA des unteren Kontexts auf eine Stapeladresse der virtuellen Maschine, Modifizieren einer Rücksprungadresse des CSA des unteren Kontexts auf die Systemaufruf-Dienstverarbeitungsadresse des Kernels der virtuellen Maschine, und Modifizieren eines Kontext-Bits des CSA des unteren Kontexts, um den ersten CSA zu erlangen.

3. Verfahren nach Anspruch 1 oder 2, wobei der Manager für virtuelle Maschinen die Aufrufnummer in den zweiten CSA kopiert und eine Rücksprungadresse des zweiten CSA auf die Next-Hop-Adresse des Kernels der virtuellen Maschine aktualisiert, um den verarbeiteten zweiten CSA zu erlangen.

4. Verfahren nach einem der Ansprüche 1 bis 3, wobei die Next-Hop-Adresse des Kernels der virtuellen Maschine eine nächste Anweisungsadresse der Anwendung der virtuellen Maschine ist.

5. Verfahren nach einem der Ansprüche 1 bis 3, wobei die Next-Hop-Adresse des Kernels der virtuellen Maschine eine Ergebnisprüfadresse des Managers für virtuelle Maschinen ist.

6. Verfahren nach Anspruch 5, wobei das Verfahren ferner umfasst:
Erlangen, durch den Manager für virtuelle Maschinen, eines Verarbeitungsergebnisses des Kernels der virtuellen Maschine, und Verifizieren des Verarbeitungsergebnisses (306); und Springen (207), durch den Manager für virtuelle Maschinen, zu der Anwendung der virtuellen Maschine, nachdem die Verifizierung des Verarbeitungsergebnisses erfolgreich war.

7. Verfahren nach einem der Ansprüche 1 bis 6, wobei die Systemaufrufanweisung ferner eine Adresse der Anwendung der virtuellen Maschine trägt, und vor dem Springen, durch den Manager für virtuelle Maschinen basierend auf der Rücksprungadresse des ersten CSA, zu dem Kernel der virtuellen Maschine, das Verfahren ferner umfasst:
Vergleichen, durch den Manager für virtuelle Maschinen, der Adresse der Anwendung der virtuellen Maschine mit einer voreingestellten gültigen Adresse, um zu bestätigen, ob die Adresse der Anwendung der virtuellen Maschine gültig ist.

8. Verwaltungsverfahren für virtuelle Maschinen, wobei das Verfahren umfasst:
beim Empfangen (501) einer Unterbrechungsanweisung von einer peripheren Vorrichtung einer virtuellen Maschine, Erlangen (502), durch einen Manager für virtuelle Maschinen, eines Unterbrechungs-Ansteh-Bits, das der Unterbrechungsanweisung entspricht;
Bestimmen (503), durch den Manager für virtuelle Maschinen, einer Ziel-virtuellen Maschine basierend auf dem Unterbrechungs-Ansteh-Bit, wobei ein Kernel der Ziel-virtuellen Maschine ein Kernel ist, zu dem das Unterbrechungs-Ansteh-Bit gehört;
Erlangen (504), durch den Manager für virtuelle Maschinen, eines ersten CSA basierend auf einem unteren Kontext der Ziel-virtuellen Maschine und einem freien Kontextspeicherbereich CSA, und Verarbeiten eines zweiten CSA, um einen verarbeiteten zweiten CSA zu erlangen, wobei der zweite CSA vor dem ersten CSA bestimmt wird, der erste CSA dem verarbeiteten zweiten CSA benachbart ist, eine Rücksprungadresse des ersten CSA eine Unterbrechungsverarbeitungsadresse des Kernels der Ziel-virtuellen Maschine ist, eine Rücksprungadresse des verarbeiteten zweiten CSA eine aktuelle Anweisungsadresse einer Anwendung der Ziel-virtuellen Maschine ist, und der verarbeitete zweite CSA angibt, zu der aktuellen Anweisungsadresse der Anwendung der Ziel-virtuellen Maschine zu springen; und
Springen (505), durch den Manager für virtuelle Maschinen basierend auf der Rücksprungadresse des ersten CSA, zu der Unterbrechungsverarbeitungsadresse des Kernels der Ziel-virtuellen Maschine, um den Kernel der Ziel-virtuellen Maschine auszulösen, eine Unterbrechungsverarbeitung durchzuführen.

9. Verfahren nach Anspruch 8, wobei das Erlangen, durch den Manager für virtuelle Maschinen, eines ersten CSA basierend auf einem unteren Kontext der Ziel-virtuellen Maschine und einem freien Kontextspeicherbereich CSA umfasst:
Speichern, durch den Manager für virtuelle Maschinen, des unteren Kontexts der Ziel-virtuellen Maschine in dem freien CSA, um einen CSA des unteren Kontexts der Ziel-virtuellen Maschine zu erlangen; und
Modifizieren, durch den Manager für virtuelle Maschinen, eines Modus des CSA des unteren Kontexts in einen Kernel-Modus, Modifizieren einer speichergeschützten Region des CSA des unteren Kontexts auf eine Speichergrenze der Ziel-virtuellen Maschine, Modifizieren einer Stapeladresse des CSA des unteren Kontexts auf eine Stapeladresse der Ziel-virtuellen Maschine, Modifizieren einer Rücksprungadresse des CSA des unteren Kontexts auf die Unterbrechungsverarbeitungsadresse des Kernels der Ziel-virtuellen Maschine, und Modifizieren eines Kontext-Bits des CSA des unteren Kontexts, um den ersten CSA zu erlangen.

10. Verfahren nach Anspruch 8 oder 9, wobei der Manager für virtuelle Maschinen eine Rücksprungadresse des zweiten CSA auf die aktuelle Anweisungsadresse der Anwendung der Ziel-virtuellen Maschine aktualisiert, um den verarbeiteten zweiten CSA zu erlangen.

11. Verwaltungsvorrichtung für virtuelle Maschinen, wobei die Vorrichtung umfasst:
ein Empfangsmodul (601), das konfiguriert ist, eine Systemaufrufanweisung von einer Anwendung einer virtuellen Maschine zu empfangen (301), wobei die Systemaufrufanweisung eine Aufrufnummer trägt und die Systemaufrufanweisung eine privilegierte Anweisung ist;
ein Bestimmungsmodul (602), das konfiguriert ist zum: Erlangen (302) eines ersten Kontextspeicherbereichs CSA basierend auf einem unteren Kontext einer virtuellen Maschine und einem freien CSA, und Verarbeiten eines zweiten CSA basierend auf der Aufrufnummer, um einen verarbeiteten zweiten CSA zu erlangen, wobei der zweite CSA vor dem ersten CSA bestimmt wird, der erste CSA dem verarbeiteten zweiten CSA benachbart ist, eine Rücksprungadresse des ersten CSA eine Systemaufruf-Dienstverarbeitungsadresse eines Kernels der virtuellen Maschine ist, eine Rücksprungadresse des verarbeiteten zweiten CSA eine Next-Hop-Adresse des Kernels der virtuellen Maschine ist, und der verarbeitete zweite CSA angibt, zu der Next-Hop-Adresse des Kernels der virtuellen Maschine zu springen, nachdem die Systemaufrufverarbeitung abgeschlossen ist; und
ein Verarbeitungsmodul (603), das konfiguriert ist, basierend auf der Rücksprungadresse des ersten CSA, zu der Systemaufruf-Dienstverarbeitungsadresse des Kernels der virtuellen Maschine zu springen (303), um den Kernel der virtuellen Maschine auszulösen, die Systemaufrufverarbeitung durchzuführen (304).

12. Verwaltungsvorrichtung für virtuelle Maschinen (700), umfassend einen Prozessor (702) und einen Speicher (701), wobei der Speicher konfiguriert ist, Programmcode zu speichern, und der Prozessor konfiguriert ist, den Programmcode aufzurufen, um das Verfahren nach einem der Ansprüche 1 bis 7 durchzuführen.

13. Verwaltungsvorrichtung für virtuelle Maschinen (700), umfassend einen Prozessor (702) und einen Speicher (701), wobei der Speicher konfiguriert ist, Programmcode zu speichern, und der Prozessor konfiguriert ist, den Programmcode aufzurufen, um das Verfahren nach einem der Ansprüche 8 bis 10 durchzuführen.

## Revendications

1. Procédé de gestion de machine virtuelle, dans lequel le procédé comprend :
la réception (301), par un gestionnaire de machine virtuelle, d'une instruction d'appel système provenant d'une application de machine virtuelle, dans lequel l'instruction d'appel système contient un numéro d'appel et l'instruction d'appel système est une instruction privilégiée ;
l'obtention (302), par le gestionnaire de machine virtuelle, d'une première zone de sauvegarde de contexte, CSA, sur la base du contexte inférieur d'une machine virtuelle et d'une CSA libre, et le traitement d'une seconde CSA sur la base du numéro d'appel, pour obtenir une seconde CSA traitée, dans lequel la seconde CSA est déterminée avant la première CSA, la première CSA est adjacente à la seconde CSA traitée, une adresse de retour de la première CSA est une adresse de traitement de service d'appel système d'un noyau de machine virtuelle, une adresse de retour de la seconde CSA traitée est une adresse de saut suivant du noyau de machine virtuelle, et la seconde CSA traitée indique de sauter à l'adresse de saut suivant du noyau de machine virtuelle après que le traitement de l'appel système est terminé ; et
le saut (303), par le gestionnaire de machine virtuelle sur la base de l'adresse de retour de la première CSA, à l'adresse de traitement de service d'appel système du noyau de machine virtuelle, de manière à déclencher le noyau de machine virtuelle pour réaliser le traitement de l'appel système (304).

2. Procédé selon la revendication 1, dans lequel l'obtention, par le gestionnaire de machine virtuelle, d'une première zone de sauvegarde de contexte, CSA, sur la base du contexte inférieur d'une machine virtuelle et d'une CSA libre comprend :
le stockage, par le gestionnaire de machine virtuelle, du contexte inférieur de la machine virtuelle dans la CSA libre, pour obtenir une CSA du contexte inférieur de la machine virtuelle ; et
la modification, par le gestionnaire de machine virtuelle, d'un mode de la CSA du contexte inférieur en un mode noyau, la modification d'une région mémoire protégée de la CSA du contexte inférieur en une limite mémoire de la machine virtuelle, la modification d'une adresse de pile de la CSA du contexte inférieur en une adresse de pile de la machine virtuelle, la modification d'une adresse de retour de la CSA du contexte inférieur en l'adresse de traitement de service d'appel système du noyau de machine virtuelle et la modification d'un bit de contexte de la CSA du contexte inférieur, pour obtenir la première CSA.

3. Procédé selon la revendication 1 ou 2, dans lequel le gestionnaire de machine virtuelle copie le numéro d'appel vers la seconde CSA et met à jour une adresse de retour de la seconde CSA vers l'adresse de saut suivant du noyau de machine virtuelle, pour obtenir la seconde CSA traitée.

4. Procédé selon l'une quelconque des revendications 1 à 3, dans lequel l'adresse de saut suivant du noyau de machine virtuelle est une adresse d'instruction suivante de l'application de machine virtuelle.

5. Procédé selon l'une quelconque des revendications 1 à 3, dans lequel l'adresse de saut suivant du noyau de machine virtuelle est une adresse de vérification de résultat du gestionnaire de machine virtuelle.

6. Procédé selon la revendication 5, dans lequel le procédé comprend également :
l'obtention, par le gestionnaire de machine virtuelle, d'un résultat de traitement du noyau de machine virtuelle, et la vérification du résultat de traitement (306) ; et
le saut (207), par le gestionnaire de machine virtuelle, à l'application de machine virtuelle après que la vérification du résultat de traitement réussisse.

7. Procédé selon l'une quelconque des revendications 1 à 6, dans lequel l'instruction d'appel système contient également une adresse de l'application de machine virtuelle et, avant le saut, par le gestionnaire de machine virtuelle sur la base de l'adresse de retour de la première CSA, au noyau de machine virtuelle, le procédé comprend également :
la comparaison, par le gestionnaire de machine virtuelle, de l'adresse de l'application de machine virtuelle avec une adresse valide prédéfinie, pour confirmer que l'adresse de l'application de machine virtuelle est valide.

8. Procédé de gestion de machine virtuelle, dans lequel le procédé comprend :
lors de la réception (501) d'une instruction d'interruption provenant d'un dispositif périphérique d'une machine virtuelle, l'obtention (502), par un gestionnaire de machine virtuelle, d'un bit d'interruption en attente correspondant à l'instruction d'interruption ;
la détermination (503), par le gestionnaire de machine virtuelle, d'une machine virtuelle cible sur la base du bit d'interruption en attente, dans lequel un noyau de la machine virtuelle cible est un noyau auquel appartient le bit d'interruption en attente ;
l'obtention (504), par le gestionnaire de machine virtuelle, d'une première CSA sur la base du contexte inférieur de la machine virtuelle cible et d'une zone de sauvegarde de contexte, CSA, libre, et le traitement d'une seconde CSA, pour obtenir une seconde CSA traitée, dans lequel la seconde CSA est déterminée avant la première CSA, la première CSA est adjacente à la seconde CSA traitée, une adresse de retour de la première CSA est une adresse de traitement d'interruption du noyau de la machine virtuelle cible, une adresse de retour de la seconde CSA traitée est une adresse d'instruction actuelle d'une application de la machine virtuelle cible, et la seconde CSA traitée indique de sauter à l'adresse d'instruction actuelle de l'application de la machine virtuelle cible ; et
le saut (505), par le gestionnaire de machine virtuelle sur la base de l'adresse de retour de la première CSA, à l'adresse de traitement d'interruption du noyau de la machine virtuelle cible, de manière à déclencher le noyau de la machine virtuelle cible pour réaliser le traitement d'interruption.

9. Procédé selon la revendication 8, dans lequel l'obtention, par le gestionnaire de machine virtuelle, d'une première CSA sur la base du contexte inférieur de la machine virtuelle cible et d'une zone de sauvegarde de contexte, CSA, libre comprend :
le stockage, par le gestionnaire de machine virtuelle, du contexte inférieur de la machine virtuelle cible dans la CSA libre, pour obtenir une CSA du contexte inférieur de la machine virtuelle cible ; et
la modification, par le gestionnaire de machine virtuelle, d'un mode de la CSA du contexte inférieur en un mode noyau, la modification d'une région mémoire protégée de la CSA du contexte inférieur en une limite mémoire de la machine virtuelle cible, la modification d'une adresse de pile de la CSA du contexte inférieur en une adresse de pile de la machine virtuelle cible, la modification d'une adresse de retour de la CSA du contexte inférieur en l'adresse de traitement d'interruption du noyau de la machine virtuelle cible et la modification d'un bit de contexte de la CSA du contexte inférieur, pour obtenir la première CSA.

10. Procédé selon la revendication 8 ou 9, dans lequel le gestionnaire de machine virtuelle met à jour une adresse de retour de la seconde CSA vers l'adresse d'instruction actuelle de l'application de la machine virtuelle cible, pour obtenir la seconde CSA traitée.

11. Appareil de gestion de machine virtuelle, dans lequel l'appareil comprend :
un module de réception (601), configuré pour recevoir (301) une instruction d'appel système provenant d'une application de machine virtuelle, dans lequel l'instruction d'appel système contient un numéro d'appel et l'instruction d'appel système est une instruction privilégiée ;
un module de détermination (602), configuré pour : obtenir (302) une première zone de sauvegarde de contexte, CSA, sur la base du contexte inférieur d'une machine virtuelle et d'une CSA libre, et traiter une seconde CSA sur la base du numéro d'appel, pour obtenir une seconde CSA traitée, dans lequel la seconde CSA est déterminée avant la première CSA, la première CSA est adjacente à la seconde CSA traitée, une adresse de retour de la première CSA est une adresse de traitement de service d'appel système d'un noyau de machine virtuelle, une adresse de retour de la seconde CSA traitée est une adresse de saut suivant du noyau de machine virtuelle, et la seconde CSA traitée indique de sauter à l'adresse de saut suivant du noyau de machine virtuelle après que le traitement de l'appel système est terminé ; et
un module de traitement (603), configuré pour sauter (303), sur la base de l'adresse de retour de la première CSA, à l'adresse de traitement de service d'appel système du noyau de machine virtuelle, de manière à déclencher le noyau de machine virtuelle pour réaliser le traitement de l'appel système (304).

12. Appareil de gestion de machine virtuelle (700), comprenant un processeur (702) et une mémoire (701), dans lequel la mémoire est configurée pour stocker le code de programme et le processeur est configuré pour invoquer le code de programme, pour réaliser le procédé selon l'une quelconque des revendications 1 à 7.

13. Appareil de gestion de machine virtuelle (700), comprenant un processeur (702) et une mémoire (701), dans lequel la mémoire est configurée pour stocker le code de programme et le processeur est configuré pour invoquer le code de programme, pour réaliser le procédé selon l'une quelconque des revendications 8 à 10.
